Europäisches Patentamt

(19) European Patent Office

Office européen des brevets

(11) EP 0 919 952 A1

(12) EUROPEAN PATENT APPLICATION

(43) Date of publication:
02.06.1999 Bulletin 1999/22

(51) Int. Cl.⁶: G06T 9/00

(21) Application number: 98109423.8

(22) Date of filing: 25.05.1998

(84) Designated Contracting States:
AT BE CH CY DE DK ES FI FR GB GR IE IT LI LU
MC NL PT SE
Designated Extension States:
AL LT LV MK RO SI

(30) Priority: 28.11.1997 US 66856 P

(71) Applicant:
ECOLE POLYTECHNIQUE FEDERALE DE
LAUSANNE
1015 Lausanne (CH)

(72) Inventors:
• Mattavelli, Marco
1196 Gland (CH)

• Brunetton, Sylvain
1009 Pully (CH)

(74) Representative:
Ravenel, Thierry Gérard Louis et al
I C B,
Ingénieurs Conseils en Brevets SA,
7, rue des Sors
2074 Marin (CH)

Remarks:
A request for correction of the claims numbering has
been filed pursuant to Rule 88 EPC. A decision on
the request will be taken during the proceedings
before the Examining Division (Guidelines for
Examination in the EPO, A-V, 3.).

(54) Method for coding/decoding of a digital signal

(57) The invention concerns a method for primary processing a digital signal comprising the steps of :

- providing a digital signal to a primary processing unit ;
- primary processing said signal with said primary processing unit according to a plurality of primary processing algorithms to provide primary processed output signals,
- determining statistics of use of at least one of said primary processing algorithms,
- providing a digital statistics signal representative of said statistics for each of said primary processed output signals
- associating to each of said primary processed output signals its own statistics signal ;
- determining a complexity primary processing information signal based on said statistic signal.

Figure 12

**Description**

DEFINITION OF THE INVENTION

The present invention is a processing apparatus which aims at controlling and guaranteeing the real-time performance of data processing. The invention is based on the principle of collecting statistics of the algorithms used to process the data, on transmitting such statistics when necessary, and of associating a complexity information to such statistics. The real-time processing control can be done generating a processing time prediction signal which is a function of the complexity information, and use such prediction signal to provide processing resources which guarantee real-time processing or enables the definition of an associated degraded processing that guarantees real-time processing. Although the described invention is of general application, this document describes its application to video coding and decoding and suggests the straightforward extensions to audio coding-decoding, and to composition and rendering of media objects.

1. FIELD OF THE INVENTION

The implementation of software based video/audio decoders is an advantageous solution over traditional dedicated hardware systems. The main reason of this fact is the possibility of decoding several different video/audio compression standards, at different levels and profiles, by just changing the software while using the same hardware platform, main memory, and interfaces. Another favorable feature is the flexibility of the decoder able to cope with new developments and new tools included into future versions of the standards by just updating the decoding software. However, simultaneously guaranteeing real-time performance, needed when processing video/audio bit-streams, and an efficient use of the processing power, remains a very difficult task.
The present invention reports the main reasons of such difficulties and presents a new technique able to predict the decoding time of compressed video/audio bit-streams without the need of the actual decoding. This can be obtained if appropriate statistical information about the actual encoding processing is included and transmitted with the compressed video/audio data. Moreover, the present invention reports how such results can be used to implement new efficient processing resource allocation strategies. New possible schemes of such intelligent interactions between the encoder and the real-time OS are also proposed. An example of implementation for the MPEG-4 VM6 video algorithm based on these developments is presented. This implementation enables, at the same time, to guarantee real time performances even when the available processing resources are lower than the one theoretically necessary, and it yields optimal (minimal) image quality degradation. Such results are obtained by using the prediction of the decoding-resource needs to implement Computational Graceful Degradation techniques. The invention only reports simulation results for the MPEG-4 VM6.1 video compression algorithm, but the techniques and concepts presented here are of general application. Indeed, these techniques can be easily applied to audio coding, synthetic audio reproduction and to any future or existing compression and composition method. More precisely, they can be used for any video compression standard that is capable of transmitting in an appropriate form the statistical coding information (i.e. MPEG-1 and MPEG-2 using an appropriate transport system), and they can be implemented in any processor-based platform.
The present description is organized as follows. Section 2 discusses the problems and utility of defining and using worst case and average case complexities, justifying the need of complexity prediction. Section 3 presents the modeling of decoding complexity and the general principles of the prediction techniques. Section 4 presents the background of the invention. Section 5 summarizes the main concepts of the invention while section 6 summarizes the content of the diagrams and drawings illustrating the details and main characteristics of the invention.
In section 7, experimental results of the MPEG-4 VM6 texture coding algorithm are reported. Section 8 presents the definition of the proposed intelligent interactions between real-time OS-schedulers and video decoders. Section 9 presents the basic principles and the definition of the developed Computational Graceful Degradation (CGD) techniques, and section 10 reports overall experimental results of the control of decoding complexity using complexity prediction joint with the application of CDG techniques. Finally, section 11 concludes the description of the invention, summarizing the achievements of the invention by declaring the corresponding claims.

2. WORST-CASE AND AVERAGE-CASE DECODING COMPLEXITY

A simple solution to the problem of the variability of decoding complexity is to implement software/hardware solutions that always guarantee worst case complexity decoding. Such solutions are, in fact, the ones implicitly implemented in most of the dedicated hardware decoders. Dedicated hardware platforms, in general, are designed to guarantee worst case complexity decoding. The various hardware modules implementing the different decoding procedures are synchronized with the input/output data rate. These dedicated hardware modules can always handle any input bit-stream, not exceeding a maximum rate, and containing compressed sequences of appropriate maximum image resolutions. This can be always guaranteed, irrespectively from the coding options selected to produce the compressed bit-stream.

In contrast, in the case of programmable platforms it is necessary to define what is a worst case decoding complexity. Let us consider video coding even if the same concept can be extended to natural and synthetic audio and to other form of multimedia processing. In the video compressing field one can assume that the worst case decoding complexity is represented by the decoding of each bit/macroblock, using the coding options allowed by the considered standard that requires the highest decoding time. The coding algorithms/modes of H.263 can be approximately considered as a superset of the algorithms/modes of the various video compression standards (H.261, MPEG-1 and MPEG-2). The complete results and details of this worst-case/average-case study are omitted here for brevity. The conclusions resulting from this analysis can be summarized as follows :

1) Decoding functions can be divided into two classes. For one class a worst case can be easily defined. Let us denote this class as A. To this class belong function such as IDCT, inverse quantisation, motion compensated prediction in its various form (forward, backward, bi-directional, overlapped ... .). For the other class denoted as class B, complexity is extremely data dependent and cannot be easily characterized by the simple parameters of an hypothetical MPEG-2 like complexity profile. To this class belong operations such as VLD, VLC coding, Syntax-based Arithmetic Coding (SAC) and in general all parsing operations. The difficulty of defining a worst case is evident considering for instance SAC for which the difference between a theoretical worst-case and experimental cases is about two orders of magnitude.

2) A strict worst case complexity analysis, of both class A and B functions, leads to unrealistic results. In other words, the computational resources necessary to handle the strict worst-case complexity decoding is much higher than the resources used in average.

3) For class A functions, the actual decoding complexity depends on the actual coding options and reports a large range of variability.

4) For class B functions, the actual decoding complexity reports a dependence on coding options, but presents a reasonably narrow range of variability which is much lower than the range theoretical worst case-average case.

Worst case analysis, therefore, is not adequate to define a useful decoding complexity reference. This fact is true not only for operations which are strongly data dependent (class B), but in general for all functions even those that have a very well defined worst case such as all class A functions. From these results it is clear that guaranteeing a worst case decoding implies guaranteeing the decoding of pathologically complex sequences that in practice have an extremely low probability of occurrence. Moreover, such a guarantee would imply the allocation of a processing power up to two orders of magnitude higher than the one actually needed for the decoding of the standard test sequences. The processor in practice would work in normal conditions exploiting only a small fraction of the theoretically available processing power. Such solution to the problem of guaranteeing real-time performance is not economical and, obviously, not useful in practical applications.

Another possibility for the solution of the problem of guaranteeing real-time performance could be to consider as reference an average case decoding complexity. Before being able to successfully use such average complexity, a few questions need to be answered. Is it meaningful to define an average complexity? How can it be done? Is the average complexity sequence dependent? How can it be converted on different platforms? Can the average complexity accurately be described by parameters such as image resolution and bit-rate? Are average results characterized by sufficiently narrow variance bounds so as they can be used a priori without the need of knowing some information about the actual complexity of the incoming sequence?

One will here briefly summarize the main results and experiments that answer the mentioned questions. So as to try to define an average case for the complexity that have been considered in previously, the H.263 standard uses four typical test sequences over a wide bit-rate range from 16 kbit/sec up to 1024 kbit/sec. The sequences in CIF format are : Akiyo (300 frames), Coastguard (300 frames), Foreman (300 frames) and Mobile & Calendar (300 frames), and all these test sequences have been evaluated at fifteen different bit-rate values. Although a rigorous statistical analysis would have required a much higher number of sequences and specific statistical confidence tests, it is believed that the number of frames (1200) and the different contents of the test images are well representative of typical image sequence contents. One have considered separately the operations that have unrealistic worst case complexities (class B) from the one with a well-defined worst case behavior (class A). The experiments, for the class B operations, yield figures that are not strongly bit-rate dependent. Variance bounds for each frame are relatively narrow and these values do not report relevant variations depending on the test sequence. Such results confirm also the fact that it is not necessary to worry about strict worst case complexity. In the other case of class A, the complexity of the operations reports a relatively regular statistical behavior at very low bit-rates (< 16 kb/s), but complexity reports dependence on the bit-rate, on the image content and in particular on the used encoding options.

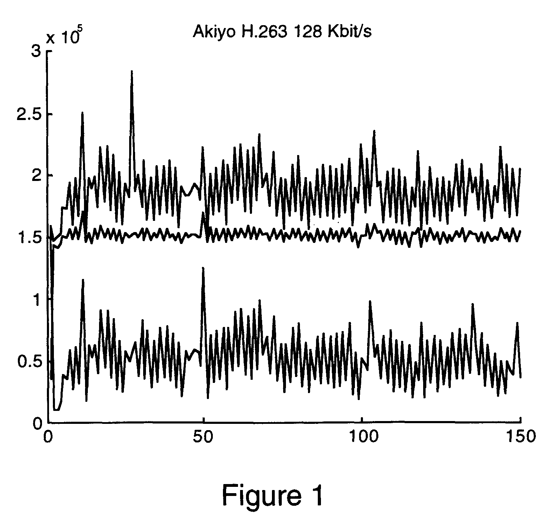

Figure 1 reports one example of H.263 complexity using different coding options for the same sequence (Akyio CIF) and same bit-rate. On this figure, the decoding time or decoding complexity (expressed in µsec) is given versus the frame number for the sequence Akyio CIF encoded with H.263 at 128 Kb/sec using different coding options. Top curve options : advanced prediction modes (APM), syntax-based arithmetic coding and unrestricted motion vectors (UMV) ; middle curve options : APM and UMV ; bottom curve options : UMV. The same sequence presents, at the same bit-rate, average-decoding complexities that range up to a factor 4 (from about 0.05 to 0.2 sec per frame). Local fluctuations for a relatively static sequence such as Akyio are also considerably large. The decoder is the Telenor H.263 software release running on a Sun Ultrasparc platform.

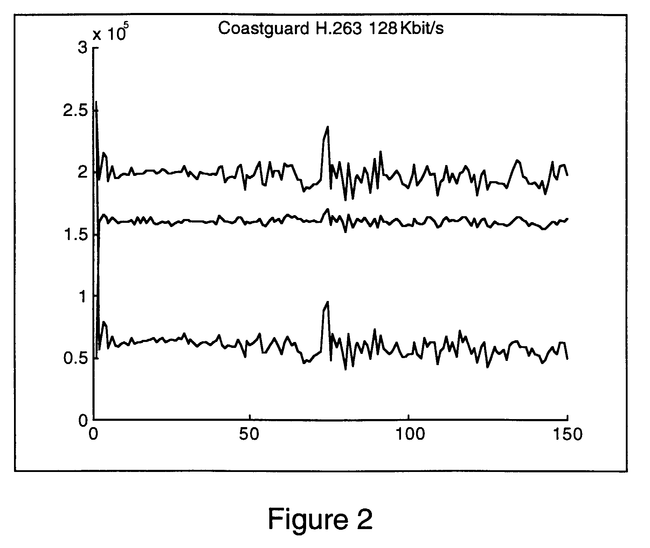

Figure 2 reports the same experiment for the sequence Coastguard. The range of the complexity figures considering both average and local values is very large as can be easily noticed. On this figure, decoding time or decoding complexity (expressed in msec) is given versus frame number for the sequence Coastguard encoded with H.263 at 128 Kb/sec using different coding options. Top curve : advanced prediction modes (APM), syntactic arithmetic coding and unrestricted motion vectors (UMV) ; middle curve APM and UMV ; bottom curve : UMV. The same sequence at the same bit-rate has average decoding complexities that range within a factor 4 from about 0.05 to 0.2 sec per frame. The decoder is the Telenor H.263 software release on a Sun Ultrasparc platform.

Although far from the theoretical worst case complexities, the variation range is less than one order of magnitude, experimental results reports behaviors for which it is difficult to be able to predict the average complexity values only relying on resolution and bit-rate. Image content and coding options (i.e. intra or inter prediction modes, advanced prediction modes, half pixel vector prediction and so on) play a fundamental role. As it will be reported in the next sections, the situation of the complexity variations for MPEG-4 sequences is much higher due to the presence of different sized VOPs arbitrarily shaped objects, of static and dynamic sprites, and the large variety of coding modes.

From a pure mathematical point of view an average complexity value can always be defined considering a large data-base of encoded sequences and using the more probable occurrence of encoding options. Conversely, such a theoretical average value is not useful at all for the aim of the present invention that is the efficient scheduling of each decoding task and the efficient use of the available processing power. Even the local average values of the actual sequence often are not stationary, and their variations around the mathematical average one are so unpredictable that no useful scheduling policy can be realized.

Therefore, the consequences of this study are that straightforward solutions to the problem of real-time resource allocation policy are of two kinds. The first is a sustained over-sizing of the processing resources. The second is to accept interruptions of the audio/video output stream when the needed decoding resources exceed the ones available on the system. Obviously, both are not desirable being respectively not efficient and economical, or they provide a quality of the services which may easily results perceptually unacceptable.

The ideal solution would be to develop techniques that are able to accurately predict such unknown behaviors and, therefore, make feasible resource allocation policies that can guarantee real-time and minimize QoS degradation.

The description of such techniques and the presentation of the results are the subjects of the next sections.

As discussed above, the key issue for the implementation of any real-time application on a software-based platform is to be able to understand when the required decoding processing time exceeds the available processing time without the need of performing the actual decoding. This is particularly important, for instance, in MPEG-4 systems in which a number of bit-streams containing a variable number of VOPs and sprites need to be decoded respecting real-time constraints, but it is also important for existing compression standards (MPEG-1, MPEG-2). The available processing time is known, in general, because it is allocated by the OS-scheduler to each decoding process. The problem is how to estimate the necessary decoding processing requirements without the need of an actual decoding of each of the incoming VOP bit-streams. Decoding each bit-stream using a priori allocated processing could result in exceeding the time slot and, therefore, in missing real-time requirements. Real-time requirements are generally defined implicitly by the frame/sampling rate of video audio bit-streams or can be easily extracted by an appropriate relative time information associated to each video frame or audio object (also denoted as time stamp). Such extraction of the real-time constraints is trivial and is not discussed here. The consequence of missing real-time constraints is the introduction of sudden interruptions on the video content. A complete analysis of the conditions which lead to miss real time-constraints for the various OS scheduling algorithm (pre-emptive multi-threading, etc.) is out of the scope of this document and it is not discussed here. The reader can refer to the included reference S. Battista, F. Gasperoni, B. Klaiber, M. Mattavelli, L. Pautet, S. Tardieu, Concurrent over Sequential Modeling for MSDL, ISO/IEC JTC1/SC29/WG11, Doc. M1525, Maceio, Brazil, November 1996 incorporated herein by reference.

## 3. BACKGROUND OF THE INVENTION

Without any doubt, the recent trend in multimedia system implementation technology is towards moving from dedicated real-time hardware to software/processor based platforms. The processing power of the last on the market processors, and of the newly announced video/audio-processor families, enables the software implementation of video/audio decoding of various compression standards and different resolution levels. Unfortunately, simply relying on the average processing power does not guarantee to respect real-time constraints of video/audio decoding ; furthermore it does not solve the problem of an efficient processing resource allocation. The fundamental reason of these facts is that the complexity of the video/audio decoding process is a fluctuating function of the time, as described in M. Mattavelli and S. Brunetton, A statistical study of MPEG-4 VM texture decoding complexity, ISO/IEC JTC1/SC29/WG11, Doc. M924, Tampere Finland, July 1996 incorporated herein by reference.

The term complexity here simply means the time needed by the decoding process. Other more abstract measures of complexity such as the amount and type of executed algorithmic elementary operations, the executed processor cycles, the amount of memory transfers to and from the external frame memories, and their combinations could be used as more precise and specific complexity measures. In the context of the present invention however, one is interested on the final results of these complexity factors. Without any loss of generality, one can consider, for any specific target software-hardware implementation, the actual processor decoding time. Indeed all the above mentioned measures of complexity can be converted for each specific platform into a single complexity measure given by the execution time.

Even by considering a specific processor platform or a specific compression standard with a relative level and profile, the complexity of video decoding is a variable and unpredictable quantity, as described in ISO/IEC MPEG2 incorporated herein by reference. The actual figures of decoding complexity depend in a complex way on many different factors. One can mention, for instance, the actual bit-rate, the image content, the options used for encoding, the Group Of Picture (GOP) structure, or the Group Of Video Object Planes (noted as VOP) structure (GOV) which can change on the fly, the state of the buffer that controls the quantization parameters and many others, as described in M. Mattavelli and S. Brunetton, Scalability of MPEG-4 VM based on the computational power of texture decoding, ISO/IEC JTC1/SC29/WG11, Doc. M925, Tampere, Finland, July 1996 incorporated herein by reference.

The complexity variability range increases with the richness of the standard. Richness means the number of implemented coding algorithms or coding modes and the number of possible coding options having different complexities. For instance, the richness of H.263 is much higher than H.261, but it is lower than the new MPEG-4 standard under development where multiple Video Object Planes (VOPs) of different sizes and characteristics need to be decoded.

In this description, Video Object (VO) means a temporal sequence of two-dimensional or three-dimensional arbitrarily shaped Video Object Planes (VOP). In case of rectangular or square shapes, these video object planes, also called hereinafter video planes, are denoted by the classical name of frames. An audio object means a stream of packets containing digital audio samples, or audio events in mono or multichannel format which can be associated to a VO. One or more audio packets can be associated to one VOP or video frame. By three-dimensional arbitrarily shaped video object planes we mean the projection or view of any three-dimensional natural or synthetic 3-dimensional object or 3-dimensional model.

In summary, the processor decoding time of each incoming frame or VOP for any given compression standard is highly variable and impossible to predict just relying on resolution and bit-rate information. Therefore, an efficient resource allocation policy (process scheduling) which aims at guaranteeing real-time performances is very difficult in these conditions. Scheduling policies that release the thread to the decoding process and receive it back after the task is completed are clearly not adequate. The same conclusion is true for a priori allocated processing time intervals. If more processing time than the one actually allocated is needed, real-time constraints are already violated by the video application. The implementation of emergency measures such as skipping frames or portions of images, on one hand might succeed in recovering the correct timing, on the other could have catastrophic effects on the Quality of Services (QoS) of the video application.

## 4. SUMMARY OF THE INVENTION

It is an object of the present invention to control and to guarantee real-time performance of data processing. It is another object of the present invention to provide a processing apparatus that associates a complexity information to the processed data.

It is another object of the present invention to provide a coding-decoding apparatus that further includes the associated complexity information to be transmitted to the decoder.

It is another object of the present invention to provide a system that, on the basis of said complexity information, provides a complexity prediction signal to be used to allocate processing resources to optimize real-time data processing.

It is another object of the present invention to provide a processing system that supervises the processing using an allocated resource signal, a predicted complexity signal, a complexity information signal and provide a processing that satisfy specified real-time constraints. According to the present invention, there is provided a processing apparatus comprising a method for processing a digital signal including the steps of : providing a digital signal, processing said signal using a plurality of processing algorithms, determining statistics of use of processing algorithms, providing a digital statistical signal representative of the statistics, associating to each of the processed signal its own associated statistics and determining a complexity information signal based on said statistic signal.

According to the present invention, there is also provided a coding apparatus that further inserts the said complexity information signal into a transmission layer containing or not the associated data and transmits the said complexity information to a decoder apparatus.

According to the present invention, there is also provided a processing apparatus that generates from the complexity information signal a processing prediction signal which is used to allocate processing resources in order to optimize the real-time processing of the associated data.

According to the present invention, there is also provided a processing apparatus that receives the processing prediction signal, the allocated processing resources and the complexity information signal, and uses the said signals to generate processing directives so as the data is processed according to the system real-time constraints.

Although the described invention is of general application, the present description describes its application to the preferred embodiment of the video coding and decoding, and suggests the straightforward extensions to audio coding-decoding and to composition and rendering of media objects.

The technique provided by the present invention is capable of predicting with an excellent degree of approximation the complexity of video or audio decoding, without the need of the actual decoding of the incoming bit-stream. These results are possible when an appropriate coding information can be included in the incoming bit-streams. The experiments demonstrate that the degree of approximation achievable is excellent considering the range of variability of the actual decoding complexity of video or audio compression standards, and that such degree is more than adequate to enable an efficient processor resource allocation. One application of the proposed technique to the MPEG-4 VM6 video coding algorithm is also demonstrated. Real-time video performances are guaranteed using the predicted decoding complexity to implement Computational Graceful Degradation (CGD) features whenever the video decoding complexity exceeds the available processing resources. By means of the proposed technique, it can be guaranteed at the same time the satisfaction of the real-time constraints and the aim of minimizing the unavoidable degradation of the QoS due to temporary lack of processing resources or to peaks of the intrinsic video decoding complexity. The same approach can obviously be used for audio decoders.

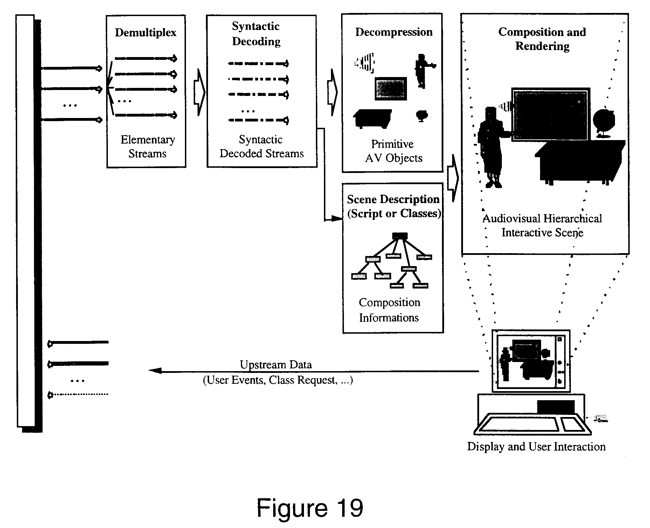

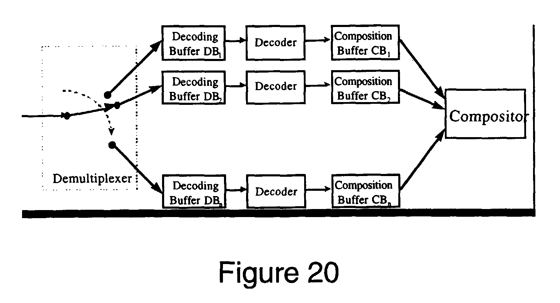

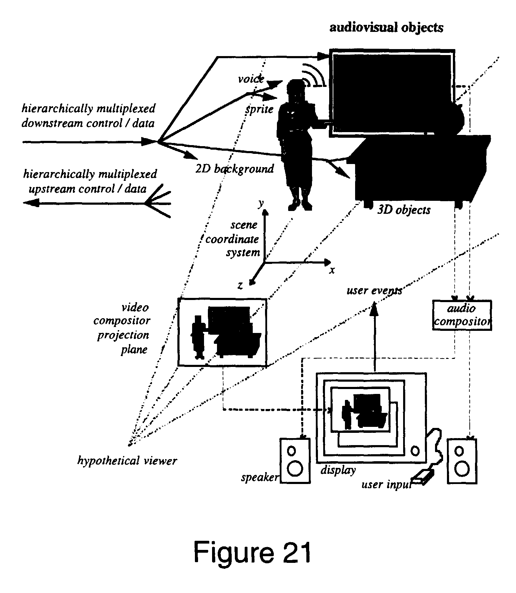

It is clear that the approach is not limited to the coding/decoding process for compression purposes, but that it can be applied to the process of composing and rendering media objects (i.e. video, audio, text, graphics, two-dimensional and three-dimensional graphic primitives and models) to the display output. The term composition means the action of putting these objects together in the same representation space. The action of transforming the media objects from a common representation space to a rendering device (speakers and viewing window) is called rendering. An illustrative example of the terminal environment for the handling of multimedia object is reported in Figure 19. More specific possible examples of the decoding, composition and rendering processes are reported in Figure 20 and 21. Figure 19 reports the processing stages in an audiovisual terminal illustrating inputs outputs and processing of audiovisual objects. Figure 20 reports an example of a decoder which provides uncompressed audiovisual objects to the audio/video compositor. Figure 21 reports an illustrative example of composition of audiovisual objects.

Additional objectives and advantages of the invention will be set forth in the description that follows, and in parts will be obvious from the description, or may be learned by practice of the invention. The objectives and advantages of the invention may be realized and obtained by means of the instrumentalities and combinations particularly pointed out in the appended claims.

## 5. BRIEF DESCRIPTION OF THE DRAWINGS

The accompanying drawings constitute a part of the specification and illustrate the principles of the invention.

- Figures 1 and 2 report a graphical representation of the decoding complexity of H.263 video illustrating the needs and background of the invention for the video decoding embodiments ;
- Figure 3 reports the an example of the modeling of processing algorithms. It includes the association of processing statistic to each state associated to the execution of a specific algorithm ;
- Figure 4 reports the extension of the model of figure 3 for a more complete and accurate model of the algorithmic complexity ;
- Figure 5 reports one preferred embodiment of the invention for the MPEG-4 video decoding. It illustrates a complexity model with the associated statistics for MPEG-4 texture decoding ;
- Figure 6 extends the model of figure 5 including additional coding modes and coding parameters plus the associated statistics ;
- Figures 7 and 8 report simulation results of a preferred embodiment of the invention. By associating a complexity measure to the statistics of the data processing (video decoding in the preferred embodiment), it is possible to predict the processing complexity of data ; actual decoding time, predicted decoding time and prediction error are represented.

6

- Figure 9 reports the measured decoding time and Decoding Time Prediction (expressed in μsec) versus the sequence VOP number of the MPEG-4 VM6 for the sequence Coastguard (Background, Small boat, Big Boat and Water VOPs) at 64 Kb/s ; these results being obtained on a specific decoder.
- Figure 10 reports the measured decoding time and Decoding Prediction Time (expressed in μsec) versus the sequence VOP number of the MPEG-4 VM6 for the sequence Coastguard (Background, Small boat, Big Boat and Water VOPs) at 128 Kb/s ; these results being obtained on a specific decoder.
- Figure 11 reports the measured decoding time and Decoding Prediction Time (expressed in μsec) versus the sequence VOP number of the MPEG-4 VM6 for the sequence Coastguard (Background, Small boat, Big Boat and Water VOPs) at 128 Kb/s ; these results being obtained on a specific decoder
- Figure 12 reports a block diagram of part of the invention. The statistics carrying the complexity information and associated to each data to be processed are read by a prediction unit which generates a prediction signal sent to the OS scheduler which allocates resources as function of the prediction signal. The figure is reporting one example of preferred embodiment for the video decoding of multiple VOP ;
- Figure 13 reports a block diagram of part of the invention relative to the construction of the complexity information header at the encoder side. Statistics of the coding and/or decoding algorithms/modes/parameters are generated at the encoder side and then inserted in a bit-stream to be transmitted to the decoder ;
- Figure 14 reports a block diagram of part of the invention relative to the interaction between the decoder supervisor and the decoder using various signals in order to guarantee real-time decoding of the data ;
- Figure 15 reports the diagram of a complexity model including associated degradation algorithms ;
- Figures 16, 17, 18 report examples of results of a preferred embodiment of the invention. The video decoding for the MPEG-4 texture decoding is provided imposing a maximum constant decoding time (complexity) for each VOP. Degradation results are also reported ;
- Figure 19 reports an example of a possible preferred embodiment of the invention illustrating the various interactions and processing related to the handling of media objects (audio, video, text, graphic, 2-D and 3D models) in a multimedia terminal ;
- Figure 20 reports an example of a portion of multimedia terminal block diagram that is another possible embodiment of the invention, and
- Figure 21 reports a drawing illustrating the composition and rendering processes, both being possible preferred embodiments of the invention.

## 6. PREDICTING DECODING COMPLEXITY BY MEANS OF ENCODING STATISTIC INFORMATION

### 6.1 A model of decoding complexity for data dependent processing

To achieve the objectives of the present invention, one need a simple model of data processing complexity that preferably has the following properties :

1) it is only related to the processing of the incoming data,
2) it is as compact as possible so that its description requires the minimum amount of information (number of bits),
3) it is representative in terms of processing complexity,
4) it is not related to the any specific software or hardware implementation of the given processing,
5) it can be easily mapped on any software/hardware platform implementation,
6) it is sufficiently accurate to yield useful predictions of the processing execution time.

A way of describing the operations of processing incoming data can be to consider the sequence of ensembles of operations as appropriate distinct algorithms. If the sequence of algorithms is not dependent explicitly on the actual content of the data to be processed or by the intermediate results of the processing, the complexity of the processing can be easily calculated a priori and the complexity-modeling problem is trivial.

In general, if the sequence of operations is explicitly data dependent (i.e. the processing instructions are contained in the data themselves) and depends also on intermediate results of the processing, the problem of modeling algorithmic complexity is much more difficult.

It is well known that any processing can be modeled by a finite-state-machine for which next state depends on the input, current state and current output (the well-known machine of Mealy). This formulation is rigorous and general. In theory it could also be used to measure the processing complexity. If one assume to associate a complexity measure to each state transition, one could measure the global complexity of the processing by monitoring the state of the machine at each step, and adding up the complexity related to each state transition. In practice, such model is not useful for two main reasons. The state machine description of usual video decoding would result extremely complex. The global complexity associated to the sequence of state transition would result too abstract to make feasible the mapping on different implementations than the canonical state machine. In practice, it would be extremely difficult to derive a complexity expressed as total execution time for different specific platforms.

A more useful model is to represent the decoding process by a flux diagram for which each data state corresponds to the execution of a specific algorithm f. Such representation is more naturally related to the usual representations of the execution of software programs. Let us associate to each data state a measure of the occurrence of such state, which is incremented each time the data processing falls in each state. Let us suppose to monitor the execution of the decoding process and, for the occurrence of each algorithm execution, to increment the associated measure. The result of this model is a representation of the data processing given by a sequence of measures associated to each algorithm composing the complexity model. In general, any encoder knows which algorithm sequence is needed for the decoding, since the encoding and the coding syntax define without ambiguities the decoding algorithms . In particular, video decoders have to implement a decoder, to build, reference images, therefore they are able indeed to generate the described complexity representation.

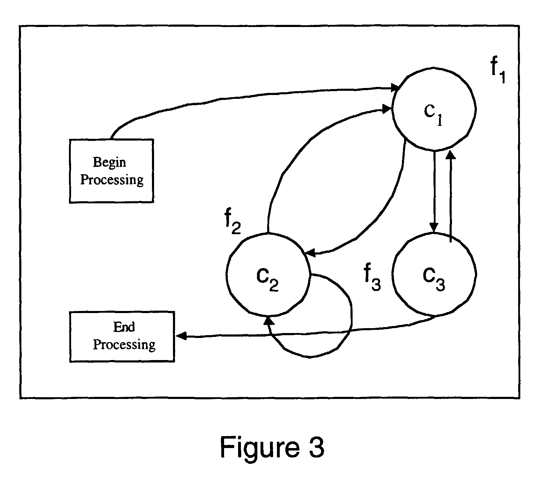

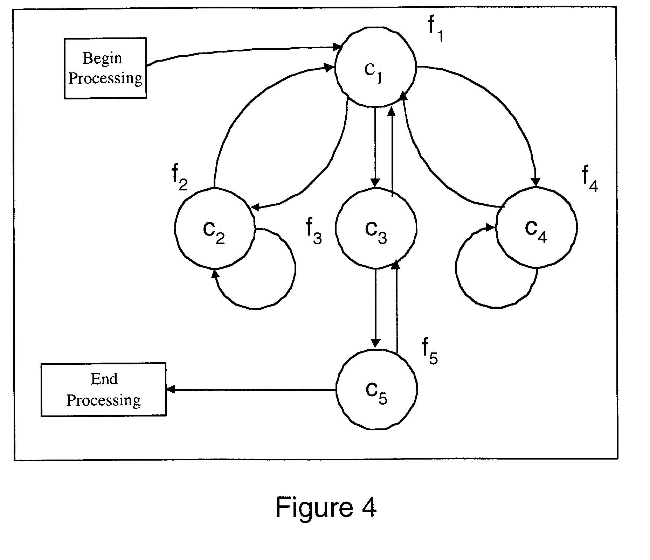

This modeling approach has the nice feature that admits different levels of complexity resolution. One can consider only a very limited number of main algorithms, or partitioning into a large set of sub-algorithms or any intermediate representation. The cost of the representation, obviously, depends on the number of algorithms that compose the model. The accuracy of the complexity representation depends on the number and type of algorithms, in other words on their relevance in terms of complexity. A simple example of a complexity model is reported in figure 3 which reports a flow graph for the modeling of a processing composed by three algorithms f and associated occurrence complexity measures c. In this model, the processing is represented by tree algorithms f and by the associated counters c. Figure 4 reports a flow graph of the model of Figure 3 for which the complexity modeling of algorithms f1 and f3 have been designed by partitioning f1 and f3 in two new algorithms and their associated complexity models, the model is more accurate since the algorithms 1 and 3 are partitioned into other algorithms associated to new algorithm occurrence measures. It must be noted that what are considered as coding modes associated to specific coding options in the usual coding language, are from the point of view of the invention distinct algorithms, since different complexities correspond to different coding modes. It must be also noted that the executions of the same algorithm using different parameters can be considered as the executions of distinct algorithms associated to the corresponding parameters.

The mapping of the complexity into any software/hardware implementation is straightforward. By knowing the complexity (execution time) of each algorithm on a specific platform and by using the information of the actual occurrence measure of each algorithms in the decoding process, one can easily calculate the total execution time (what is denoted as complexity) for the processing of an incoming bit-stream.

The key issue of this approach is to be able to find the representation in terms of minimal set of algorithms and sub-algorithms (tools) that being representative of the processing complexity, yields the best approximation of the execution time. This is particularly evident for very complex processing task such as video decoding. The importance of a minimal set is to keep as compact as possible the cost of the complexity representation and, therefore, make possible its separate transmission at a low cost.

Another feature of the proposed model is that it can easily take into account parallel software or hardware implementations. No hypothesis has been done on the internal implementation of each algorithms. In fact, they can be implemented at any level of hardware or software parallelism. The case for which different algorithms of the model have parallel implementations can also be treated by simplifying the model and just ignoring some counters associated to algorithms implemented in parallel. Simple practical examples of these cases are given below after the complete definition of the modeling-prediction complexity problem.

6.2 <u>A technique to predict video decoding complexity : Decoding Complexity Prediction by Coding Statistics (DCPCS)</u>

Let us consider a specific software/hardware implementation of a video decoder, running on a specific hardware platform. Since no hypothesis is made on the architecture of the software or on the architecture of the hardware, the approach doesn't loose any generality.

Let us consider that the true complexity C* (execution time) for the decoding of a given input data (i.e. a single frame or a MPEG-4 VOP) is a function P*, specific for the software/hardware implementation at hand, of the sequence of all the various processing operations $p_l$ l=1,...,L needed to decode the incoming data :

$$C^* = P^*(p_1, p_2, .., p_l, .... p_L). \tag{1}$$

The $p_l$ describe the sequence of operations that define the decoding process. They are, for instance, the parsing of the bit-stream, the sequence of operations for decoding the in various form Intra, Inter, Not-Coded, Shape, Padding, the inverse quantisation, the IDCT, the motion compensation in its various form OBMC, simple prediction, 4 vector prediction , the parameter that characterize the processing of each prediction mode (integer pel vector prediction, half pel vector prediction), the number of bitwise parsing operations, the number of non-zero DCT coefficients and so on.

The actual expression of the function P* is certainly extremely difficult to obtain. On the other hand, the objective of the present invention is to avoid the necessity to know all the parameters that define the complexity, but just to be able to predict the true complexity C* with a good degree of approximation. The cost of the description of the exact complexity function P* in terms of all coding parameters would be, indeed, prohibitive for the purposes of the present invention.

Therefore, let us leave the problem of finding the exact expression of the complexity function P* and try to find a sufficiently accurate approximation F of the function P* which provides a prediction C, using the model proposed in the previous section. One is therefore limited to consider a number I of algorithms fi, with i=1,...,I with I << L, and the associated model counters $c_i$ :

$$C = F(c_1 \cdot f_1, c_2 \cdot f_2, .. c_i \cdot f_i, .. c_1 \cdot f_1) = c_1 \cdot w_1 + c_2 \cdot w_2 + ... + c_i \cdot w_i + ... + c_1 \cdot w_1 \approx C^* \qquad (2)$$

where the coefficients $w_i$ related to each $c_i$ are complexity weight corresponding to the model algorithm $f_i$ which accounts for the specific software and hardware architecture at hand.

Let us suppose now, that the values of the vector c for the incoming data (frame or VOP) are known. If the vector w of the $w_i$ weights is known, one can predict the complexity of the incoming VOP bit-stream by a simple linear combination.

6.3 A method to estimate the algorithms weight coefficients w

The values of the vector w can be obtained by direct measurements on the platform, if the complexity values (execution time) of each function are accessible. In general, they can be also indirectly estimated by means of a simple linear regression applied on a set of measures of the true complexities $C^*_k$, with k =1 ... K, obtained by K samples of data processing (i.e. K frames or K VOPs taken from different sequences) on the selected platform :

$$\begin{cases} \dot{C}_1 = W_1 \cdot C_{11} + W_2 \cdot C_{12} + ... + W_i \cdot C_{1i} + ... + W_I \cdot C_{1I} \\ \dot{C}_2 = W_1 \cdot C_{21} + W_2 \cdot C_{22} + ... + W_i \cdot C_{2i} + ... + W_I \cdot C_{2I} \\ ........ \\ \dot{C}_k = ... \\ ........ \\ \dot{C}_K = W_1 \cdot C_{K1} + W_2 \cdot C_{K2} + ... + W_i \cdot C_{Ki} + ... + W_I \cdot C_{KI} \end{cases} \qquad (3)$$

In matrix form the estimated vector of weights w can be expressed by the classical least square minimization expression :

$$\hat{w} = (c^T c)^{-1} c^T C, \qquad (4)$$

where T indicates the transpose matrix,
and -1 indicates the inverse matrix.

Obviously, the linear regression and the measures of the $C_k$ complexities can be made off-line since they have as objective the estimation of the vector w which is characteristic of a specific software/hardware decoder implementation and do not depend on the incoming data.

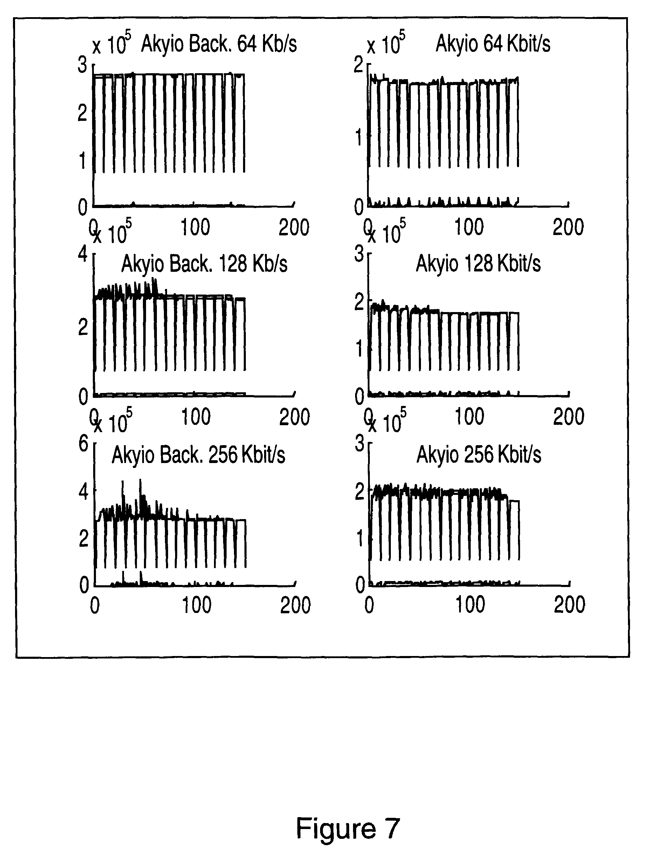

Once the vector of the w parameters is estimated, the evaluation of the actual complexity C of the incoming bit-stream can be simply done by calculating the linear combination of the complexity function. In practice, this can be done by reading the actual $c_i$ counter values written in an appropriate form in the incoming data, and calculating the value of F(c). This fact implies, for instance, that video compression standards should be able to insert complexity information in appropriate headers of frames or VOPs, or transmit them as accompanying information. Figure 7 reports the measured decoding time and Decoding Time Prediction (expressed in msec) versus the sequence VOP number of the texture decoding of MPEG-4 VM6 for the sequence Akyio (Background and Akyio VOPs) at different bit-rates. The decoder is the Momusys VM6 on a Sun Ultrasparc. The absolute value of the Decoding Time Prediction error is reported in the bottom curve near the 0 value.

6.4 Definition of the complexity models for the texture decoding of MPEG-4 VM6 VOPs

In the previous section, a model for decoding complexity has been developed, aiming at being at the same time related only to the processing and apt to be mapped on any platform implementation. These ideal requirements have been expressed in six points. A last requirement needs to be verified. Does the model and the associated complexity representation provide complexity (time) predictions sufficiently compact but accurate enough for the aims of the present invention? There is described in this paragraph an example of application of the modeling to the texture decoding of MPEG-4 VM6 VOPsm, excluding the processing of shape coding and the padding of macroblocks. This exclusion is just motivated by the fact that at the time of the modeling and simulations, one have investigated only the stable coding modules of the MPEG-4 VM. The same modeling principles can be applied to those and to all new MPEG-4 coding algorithms and modes.

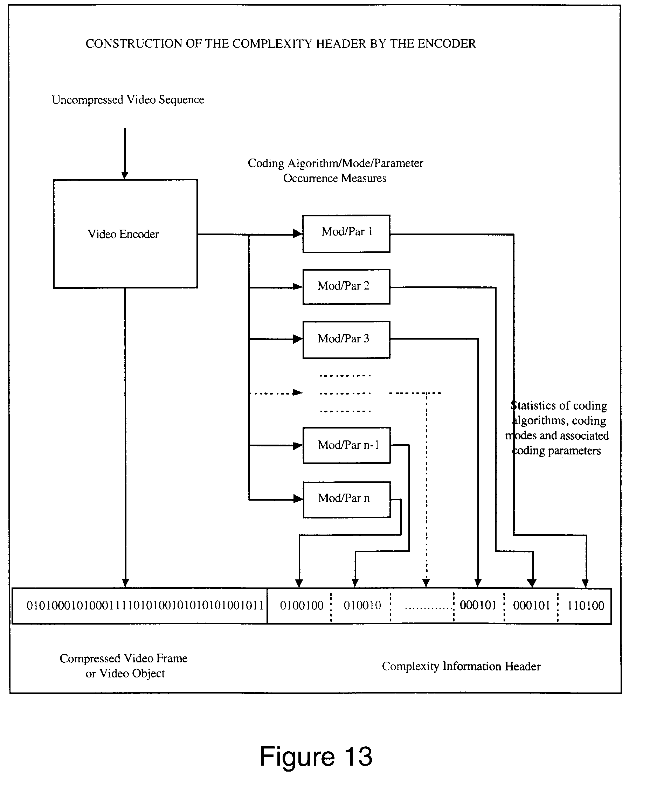

Let us partition the decoding of each MPEG-4 VOP in the following seven algorithms which represent all the texture coding process of any VOP including luminance and chrominance (Intra, Inter, Skip, Advanced Prediction Mode (ADM), Normal Prediction Mode (NPM), DCT coefficient processing (DCT_coeff), and DCT line processing (DCT_line)). Let us associate to each coding-decoding algorithm a statistic measure defined as follows. For Intra, Inter and Skip, it counts each time a macroblock is coded by using the Intra, Inter or Non-Coded coding mode. For ADM and NPM the statistic measure indicates the number of blocks 8x8 predicted using advanced prediction modes (OBMC or four vectors for macroblock) or normal prediction modes. For DCT_coeff, the measure counts the total number of DCT coefficients per VOP, and DCT_line the total number of executed DCT 8x1 per VOP. All these counters can be easily inserted in any MPEG-4 compliant or any other video/audio encoder. Figure 13 reports a schematic diagram of the process of counting coding algorithms/modes/parameters and provides a statistic description of the decoding process according to any complexity model. This diagram represents the generation of the Complexity Information Header at the encoder side. The encoder increments the counters of the coding algorithms/modes/parameters that are used to encode the video frame or video object to generate the associated statistics signal (known as complexity information). At the end of the encoding of each video frame or video object the statistics of the used coding algorithms/modes/parameters is inserted in the Complexity Information Header. Figure 1 reports a simplified flow graph of the MPEG-4 VM6 texture decoding algorithms. Note that, in the proposed technique, it is not necessary to explicitly model the actual decoder flow graph. The above graph represents the schematic flow diagram of a possible simple VOP texture decoding model of MPEG-4. It has to be noticed that by estimating the complexity weights using the total VOP decoding measures as explained in the previous paragraph, it is not even necessary to explicitly specify all transitions in the decoding flow diagram model.

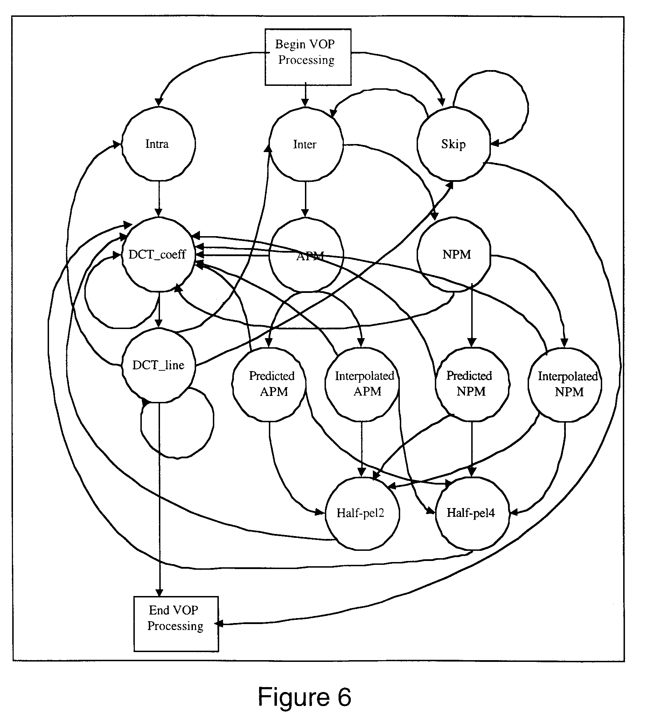

More accurate complexity models could be designed by introducing new algorithms and the associated measures of occurrences. An example of a more accurate model including the partitioning of APM and NPM into predicted or bi-directional modes and into half-pel motion compensation modes is reported in Figure 6 which represents an example of extension of the MPEG-4 texture decoding complexity model including the different mode prediction and half-pel motion compensation functions.

A reduction to simpler decoding models when many counters of different algorithms are available is straightforward. Some counters can be ignored if, in a specific software/hardware implementation, they do not implies any or any relevant complexity difference. For instance, if the implementation does not yields different processing time if a macroblock is predicted by a full pel or half pel vector, or if there is no difference between APM or NPM, all these counters can be ignored or can be combined. The specific action depends on the architecture and on the complexity features of the software/hardware decoding platform used.

As reported in these model examples, a meaningful partitioning of the algorithms in terms of complexity can be easily done only referring to the processing of the data and without the need of specifying any software or hardware implementation. Only in the phase of estimating the weights $w_i$ and to perform the actual prediction it is necessary to refer to a specific hardware/software implementation.

The two simple models presented here are also capable of taking into account parallel implementations which are implemented in each algorithm such as any packed arithmetic implementation or higher levels of parallelism. Parallel implementations at levels of macroblock decoding are not likely to occur in MPEG-4 systems. Decoders need to respect a given sequential order in decoding the macroblocks that is intrinsic in the syntax of the video data flow. Moreover, for multimedia processor implementations, the ones that are particularly considered in this description, parallelism is likely to be implemented at much lower levels than macroblock decoding. Higher levels are indeed very unlikely to appear.

Platforms that include also some hardware module accelerators, can be taken into account for the model. If one have, for instance, the hardware implementation of a 8x8 DCT module, one can simply discard the DCT_coeff and DCT_line counters and simply use the combination of Intra and Inter counters to predict the DCT decoding complexity.

Similar measures can be taken for other hardware accelerator modules.

The present complexity modeling approach can be applied to the audio/video decoding, composition and rendering of media objects or to any real-time processing of data.

## 7. EXPERIMENTAL RESULTS OF VIDEO DECODING COMPLEXITY PREDICTION

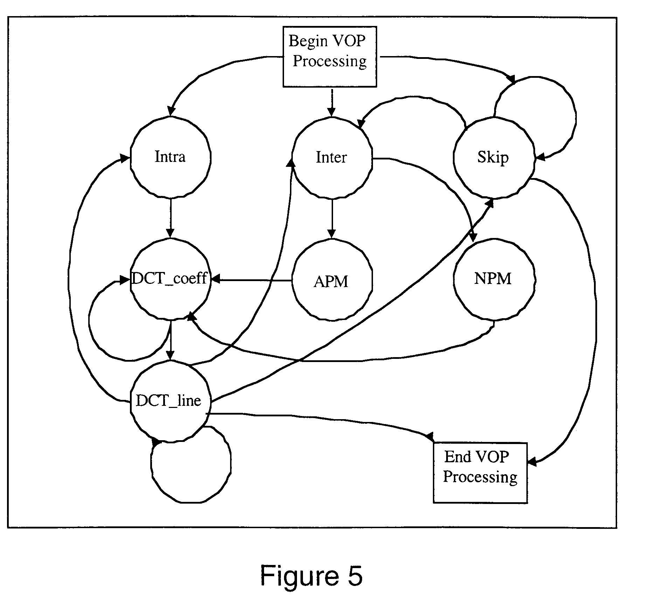

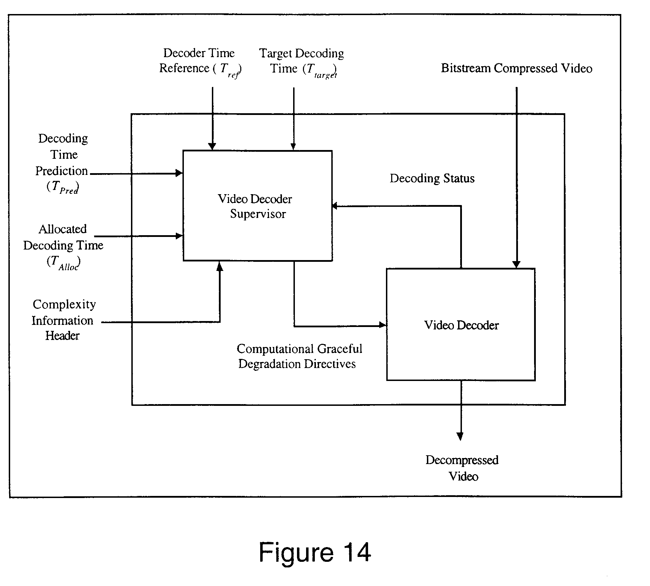

This section reports simulation results of the prediction of VOP decoding complexity for the MPEG-4 VM6 compression standard. Counters corresponding to the algorithms defined by the model of Figure 5 have been inserted in the Momusys VM6 encoder implementation to generate the mentioned statistic measures. These integer figures have been converted into percentage values referred to the actual number of VOP macroblocks, normalized to 8 bit values and have been supposed to be transmitted as a VOP complexity header for each VOP. The cost of this information transmission results of a few tenths of bits and can be considered negligible if compared to the total video bit-rate. Obviously, any other representation of the statistical coding information which has a sufficient precision can be employed. A schematic diagram of this decoding time (complexity) prediction signal generation process is reported in figure 14 which represents a schematic diagram of VOP video decompression interactions between the Video Decoder and the Video Decoder Supervisor when the Allocated Decoding Time ($T_{Alloc}$)is lower than the Decoding Time Prediction ($T_{Pred}$). The Target Decoding Time and Decoder Time Reference are used to verify that the Decompressed Video elements are made available at the desired time. The Target Decoding Time is derived implicitly by the frame or sampling rate or by the information associated to each VOP or video frame (associated time stamps).

Measures of the texture decoding time of each VOP for different video sequence have been performed on a Sun UltraSparc platform. The decoder is the Momusys VM6 decoder.

The estimation of the weight w vector has been obtained by a linear regression applied on the measured decoding time of each VOP using the expression of equation (4). To demonstrate the robustness of the proposed technique, the complexity prediction results have been generated using a vector w, estimated using the complexity measurements of all the test sequences, except the one for which the prediction is calculated. For instance, to predict a sequence A, the weights estimated on sequences B and C have been used, and so on respectively for the other test sequences. Table 1 reports the results of the different estimates of the vector w for the sequences Akyio, Coastguard and Bream. As can be easily noticed, complexity (time) estimates from different sequences do not differ relevantly from one to the other. Disposing of a relatively large set of sequences with the associated measurements, one can easily perform off-line estimates of decoder weights w characteristic of the decoder at hand.

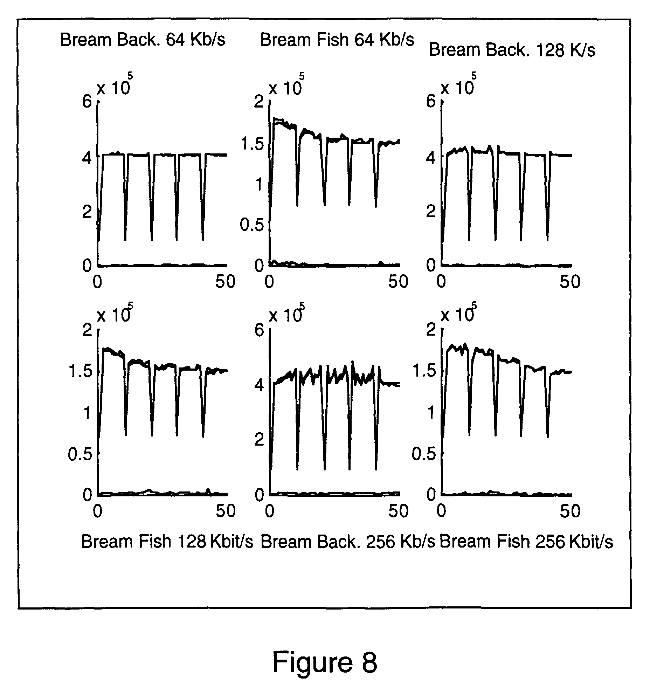

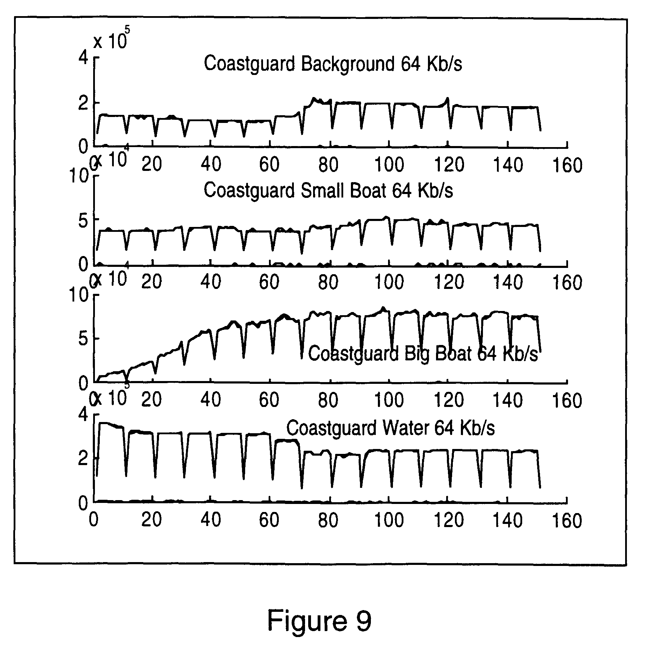

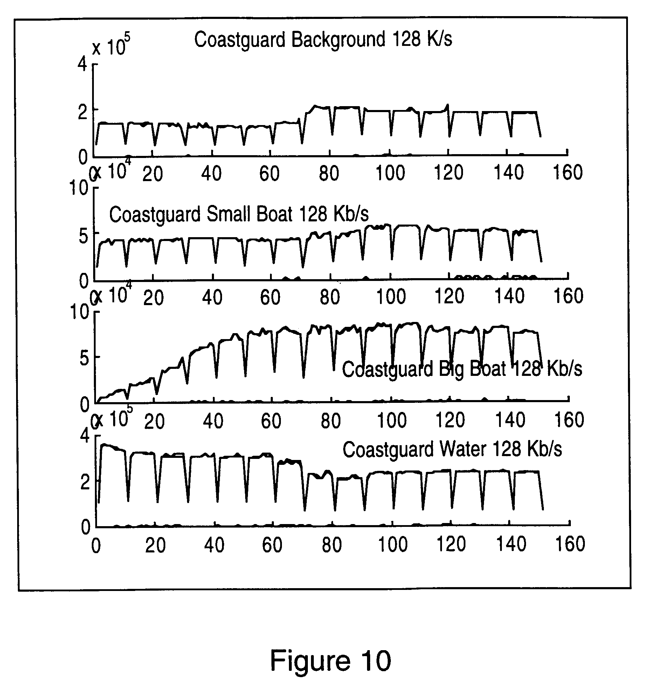

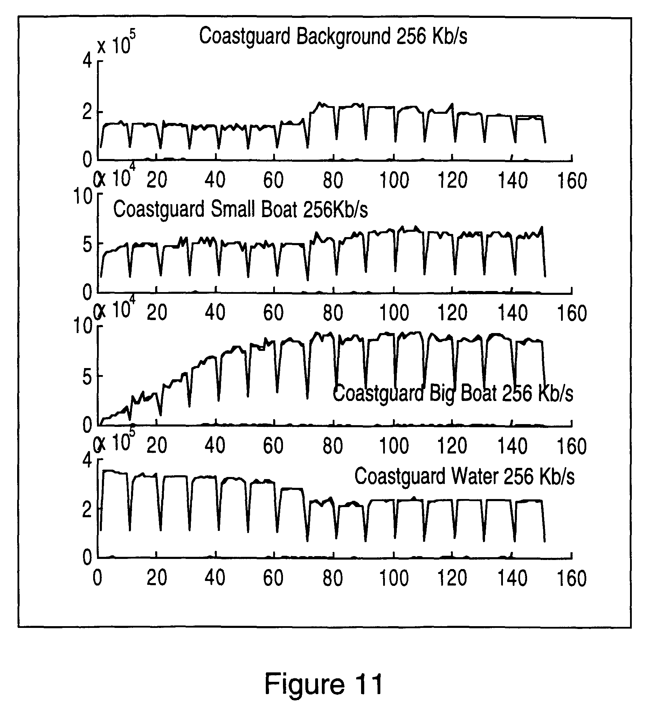

Figure 7 reports the measured VOP decoding time, the VOP decoding time prediction and the time prediction errors (in absolute value) for the two VOPs of the sequence Akyio. Figure 8 represents the measured decoding time and Decoding Time Prediction (expressed in msec) versus the sequence VOP number of the MPEG-4 VM6 for the sequence Bream (Background and Fish VOP) at different bit-rates. The decoder is the Momusys VM6 on a Sun Ultrasparc. The absolute value of the Decoding Time Prediction error is reported in the bottom curve near the 0 value. The results have been obtained at different bit-rates and all measures are expressed in msec. The same experiment results are reported for the sequences Bream and Coastguard. In figures 9, 10 and 11, as can be easily noticed, while the measured actual decoding time has strong variations for each VOP, the decoding time prediction is very accurate and the two curves for most of the samples are difficult to distinguish one from the other. In these experiments, the error of the prediction is lower than 5% for each VOP and in average is around 1-2%.

| W (msec/f) | Akiyo | Bream | Coastguard |
|---|---|---|---|
| Intra | 38.68 | 38.84 | 38.15 |
| Inter | 30.95 | 29.60 | 29.56 |
| Skip | 5.55 | 5.53 | 5.51 |
| DCT_line | 2.15 | 0.37 | 1.24 |
| DCT_coeff | 1.47 | 6.58 | 6.18 |
| APM | 226.47 | 230.23 | 228.70 |
| NPM | 36.30 | 37.60 | 36.01 |

Table 1. Estimated complexity weights vector w for the texture decoding complexity model of Figure 5 for different sets of measures. The complexity relevance for each weight is given by the product of the algorithm count and by the weight itself.

The excellent results demonstrate that a relatively simple complexity model is able to predict the decoding time (complexity) with a very good degree of approximation, when appropriate coding statistics are available. The degree of approximation resulting from the proposed method, indeed, is more than adequate to enable an intelligent and efficient resource allocation strategy.

The description and discussion of the new possible schemes of interaction between the real-time OS and the video decoder are the subject of next sections.

Another important conclusion is the fact that a very complex process such as MPEG-4 texture video decoding can be described by a suitable high level coding statistic information which is not directly related to any software or hardware implementation. The vector of coding mode counter values is, in fact, a compact coding parameter and coding mode information of the compressed bit-stream. Moreover, the obtained results reports that it is not necessary to define a very detailed model of the software/hardware decoder platform. Very complex decoder features such as cash strategy or memory accesses which could have a non-strictly deterministic behavior, can be taken into account in a statistical sense when one estimate the value of the weight vector characteristic of the decoder platform used.

8. NEW SCHEMES OF DECODER-OS SCHEDULER INTERACTIONS

New schemes of interaction between the decoder and the OS scheduler of the multimedia processor are possible when decoding time prediction is feasible. These schemes of interaction can be designed in order to provide the best resource allocation policy able to guarantee real-time performances.

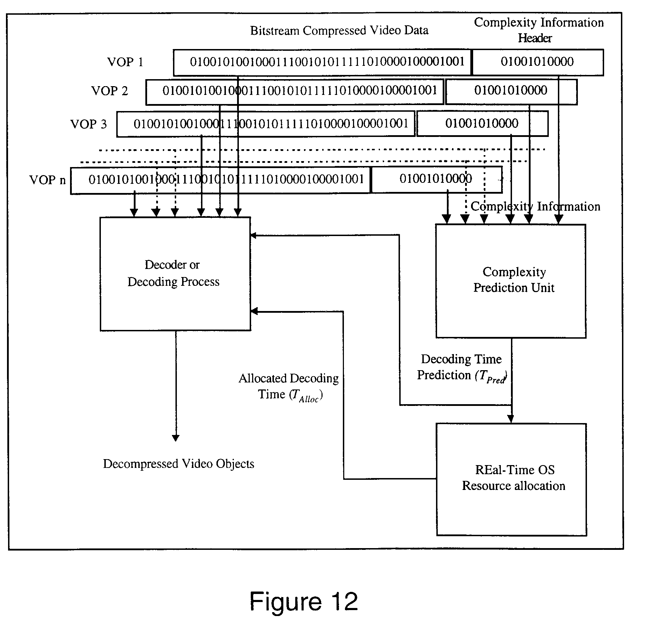

In Figure 12, an example of decoding scheme employing decoding time prediction is reported. This figure represents a decoding scheme example in which the Complexity Information of each VOP is processed by the Complexity Prediction Unit which provides the Decoding Time Prediction signal to the decoder and to the real-time OS/scheduler that allocates the necessary resources (Allocated Decoding Time) to the decoder or decoding processes. The Decoding Time Prediction unit reads the Complexity Information Header carried in each VOP/frame bit-stream header or transmitted as side information in any format, produces the decoding time prediction for each frame/VOP, and provides this information to the real-time OS scheduler. In this way, the OS scheduler can allocate the necessary resources (i.e. Allocated Decoding Time) for the decoding of each or all the VOPs respecting the associated real-time constraints. In case of non real-time encoding, the complexity information can be compressed and transmitted before the real-time transmission and real-time decoding of the video/audio bit-streams. The usefulness of such scheme is evident considering that many VOPs of unknown complexity (decoding time) need to be decoded within an associated time interval

$T_c$. This scheme is able to guarantee real-time performances if the available video processing resources $T_{Alloc}$ (i.e. Allocated Decoding Time) are sufficient for the decoding of all N incoming VOPs within the given time interval. Formally, the following relation has to be satisfied :

$$T_c \geq T_{Alloc} \geq \sum_{n=1}^{N} T_n(t) \tag{5}$$

where $T_n$ is the decoding time of the $n^{th}$ VOP, with n=1,..., N, where N being the VO and VOP index and t being the VOP sampling time.

This simple procedure scheme is applicable in two cases. The first is when all the VOPs belongs to the same sampling time t (implicitly defined by the sampling rate or also carried by time stamps associated to each VOP). In this case, there is no additional delay introduced by the decoder. The second case occurs when the VOPs can also belong to sequential sampling periods, i.e. M sampling intervals of the reference time t denoted as Dt (also referred as different time stamps). In this case, an additional delay has to be considered and an output buffer needs to be added to the decoder :

$$T_c \geq T_{Alloc} \geq \sum_{n=1}^{N} \sum_{m=1}^{M} T_n(t+m\Delta t) \tag{6}$$

This second scheme enables to smooth out computational peaks on a larger number of VOPs and on a larger time interval than a single image sampling period Dt. In other words, expression (6) might be satisfied even when expression (5) is not for some values of the sampling time t. Obviously, this result is obtained at the cost of an additional delay and an additional output buffer.

When the available processing resources (i.e. time) are not sufficient to decode all VOPs, this simple strategy cannot guarantee the respect of the real-time constraints. In such cases, other form of interactions and new decoding techniques are needed.

The main idea is to reduce the complexity of the decoding in order to satisfy relation (5) and (6) accepting some degradation to the resulting image quality. These techniques are called here Computational Graceful Degradation (CGD).

A schematic diagram of the construction of the complexity information header at the encoder side is reported in Figure 13. The encoder, during the encoding process, increments the registers (counters) corresponding to a set of encoding algorithms/modes/parameters used for the actual VOP or frame compression. At the end of the process, the counters contains a compact encoding/decoding statistical information that is written in the Complexity Information Header.

## 9. COMPUTATIONAL GRACEFUL DEGRADATION (CGD)

The main idea of CGD is to make available results of poorer quality when the results of the desirable quality cannot be obtained in real time. When the complexity of the task exceeds the available processing power, real-time services, possibly of degraded quality, are nevertheless provided respecting all real-time constraints. This approach makes the guarantee of the correct scheduling of tasks possible, even when the computational system load fluctuates and relation (5) and (6) cannot be satisfied.

The concept of graceful system degradation using imprecise results has been previously introduced in the field of real-time computing with applications to control system and automation. In these contexts, imprecise results are defined as intermediate results with the property that the more recent and intermediate result is the closer one that approximates the final result (i.e. the idea only works in monotonically improving computations). For more details, the reader can refer to W.A. Halang, A.D. Stoyenko, Constructing predictable real time systems, Kluwer Academic Publisher, 1991 ; K. Lin, S. Natarjan, J. Liu, Imprecise results : Utilizing partial computations in real-time systems, Proceedings of IEEE Real-Time System Symposium, December 1987 ; J. Liu, K. Lin, S. Natarjan, Scheduling real time periodic jobs using imprecise results, Proceedings of the IEEE Real-Time System Symposium, December 1987 incorporated herein by reference.

In these cases the problems to be solved are more concerned with fault tolerance, I/O overloads, stability and reactivity to unexpected inputs, and the corresponding techniques are not suitable for purposes of real-time decoding of compressed video/audio bit-streams.

In contrast, the aim of the present invention is to be able to provide the guarantee of real-time video decoding with possible degradations of the image quality, i.e. reductions of the peak signal to noise ratio (PSNR), without loosing parts of the image or parts of the audio content. Such alternative is certainly much more desirable than other straightforward options such as cutting image portions or simply skipping frames. These latter options, as can be easily understood, can have catastrophic consequences on prediction based coding systems. In H.263 systems, for instance, skipping the decoding of a single frame or a portion of it implies the skipping of all future incoming frames (or portion of them) before the next incoming Intra frame. The time interval of such skipping operation might cover many seconds, and the information content loss might be very relevant. Such abrupt interruptions, which are perceptually very annoying, might he caused not only by the simple fluctuation of the decoding complexity load as discussed in the previous sections, but also by the fluctuations of the load of other non-video/audio processing tasks which reduce the available processing resources (time). Moreover, such events are in general out of the control of the video/audio decoder system and cannot be easily forecasted. Considering these facts, the importance of techniques able to filter out complexity decoding peak loads or able to reduce the average decoding computation load without causing perceptually annoying consequences is evident. Skipping B-VOP could be, in some cases, a viable option for video accepting the introduction of motion judder in the sequence reproduction. Unfortunately, the presence of B-frames or B-VOP cannot be guaranteed in any bit-stream and just at the right time for which a reduction of the complexity is needed to respect the real time constraints. For audio applications, any skip of part of the content has perceptually a very annoying result.

In contrast with what could be commonly thought, also the classical multi-resolution coding features such as spatial or temporal scalabilities are not really useful for the aims of the present invention. In general, they are used to optimize the transmission bandwidth usage, enabling the compatibility of services at different bit-rates and spatial resolutions, but they must be embedded in the original bit-stream at the encoder side. If they are not embedded, the changes of resolution at the decoder size can results more computationally expansive than the simple decoding at the given resolution.

Another important reason for the introduction of CGD is given by the definition of profiles, levels and conformance tests for video compression standards based on software/processor platforms. For the MPEG-4 standard, it is expected to have a range of applications that will be much broader than the one of MPEG-1 and MPEG-2. Two possible scenarios can be identified. The first is the definition of a limited number of profiles and levels based on computational power. The second is the possibility of a continuum of decoders of different computational power. The first scenario faces very difficult tasks such as the definition of decoder conformance testing, and at the end it may result in a jungle of too many different levels and profiles.

The second scenario is completely open to platforms of different computational power. It requires pure functional decoder conformance testing and is able to provide the maximum quality of the service that is achievable by the capabilities of each platform.

The second scenario, although much more attractive than the first, poses new questions and problems have not yet been studied in video and audio coding. It is mandatory that all decoders can decode all MPEG-4 services but at different levels of quality. It means that a scalability-based on computational power is needed. This new type of scalability should enable a graceful degradation of the video quality when less than theoretically necessary computational power is available at the decoding side. In contrast with MPEG-2 scalabilities that are discrete, embedded in the bit-stream and designed for specific applications, this computational power based scalability should be continuous and implemented in all MPEG-4 bit-streams.

From these arguments, the usefulness of CGD and its important features and applications are clear. The last key point that has left CGD as a good idea but of difficult usage and implementation for video coding was that it was not clear how to implement it efficiently. Now that the present invention has developed a technique able to predict with a good degree of approximation the required decoding time of each decoding process, one have the key for useful and efficient implementation of CGD techniques.

9.1 Principles of decoding using CGD techniques

Let us consider a complexity model such as the one of Figure 3 composed by a set of I algorithms fi, with i = l,...,I and suppose to be able to design for all, or only for a subset $S^{CGD}$ of the functions $f_i$ composing the model, new functions $f_i^{CGD}$ which have the following three properties :

1) the execution of a function $f_i^{CGD}$ yields results that are an approximation of the ones produced by the original function $f_i$,
2) the execution of $f_i^{CGD}$ does not prevent the exact execution of any subsequent decoding functions,
3) the weight $w_i^{CGD}$ associated to $f_i^{CGD}$ in the considered decoder implementation is lower than the corresponding $w_i$ associated at $f_i$ (i.e. $w_i^{CGD} < w_i$).

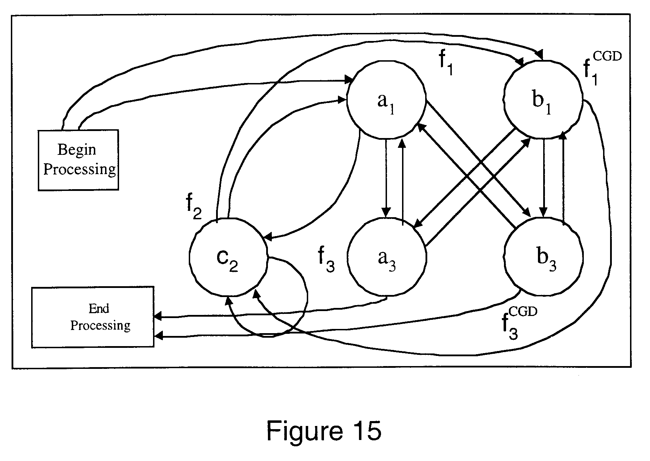

For a schematic representation of a complexity model which includes new degraded functions, one can refer to Figure 15 which represents a schematic diagram of a complexity model including CGD algorithms, CGD counters ($b_i$) and new state transitions generated by the new CGD functions. In this example $f_1, f_3 \hat{I} S^{CGD}$, and $f_2 \hat{I} S^{orig}$. In other words, for video decoding for instance, the execution of any $f_i^{CGD}$ might produces PSNR degradations in the reconstruction of some image parts, but not prevents from correctly decoding the rest of the frame or VOP.

Let us partition the functions forming the complexity model into two disjoint sets, $S^{Orig}$ and $S^{CGD}$ respectively, for the ones that do not admit a CGD version and for the ones for which it is possible to design a CGD version.

Let us consider for simplicity an image sequence composed by a sequence of single frames or single VOPs (i.e. N=1) and suppose that expression (5) is not satisfied for some values of the decoder reference time t :

$$T(t) > T_{Alloc} \tag{7}$$

where T(t) is the decoding time of the VOP at hand at the sampling time t, and to define as processing deficit $T_{Def}$ the time for which the decoding complexity exceeds the Allocated Decoding Time :

$$T(t) - T_{Alloc} = T_{Def} \tag{8}$$

Since the decoding time can be approximated by its prediction (Decoding Time Prediction) it can be expressed by :

$$T(t) \cong T_{Pred}(t) = \sum_{i=1}^{I} c_i w_i \tag{9}$$

where the $c_i$ are the counters of the complexity model and the $w_i$ are the corresponding complexity weights.

The lower limit of the decoding time executing all CGD algorithms $f_i^{CGD}$ at the place of $f_i$ for any $i \hat{I} S^{CGD}$, is given by :

$$T_{CGD} = \sum_{i \in S_{CGD}} c_i w_i^{CGD} + \sum_{i \in S_{Orig}} c_i w_i \tag{10}$$

If $T_{CGD} < T_{Alloc} < T_{Pred}$ it is therefore possible to guarantee the real-time constraints by executing the $f_i^{CGD}$ algorithms and accepting approximate decoding results. The difference $T_{Pred} - T_{CGD}$ can also be expressed as :

$$T_{Pred} - T_{CGD} = \sum_{i \in S_{CGD}} c_i (w_i - w_i^{CGD}) \tag{11}$$

If $T_{CGD} < T_{Alloc} < T_{Pred}$ , it is therefore possible to find for each $c_i$ with $i \hat{I} S^{CGD}$, a couple of integer coefficients $a_i, b_i$, for which :

$$a_i + b_i = c_i \tag{12}$$

and denoting as $T_{Process}$ any decoding time interval which respects the real time constraints (obtained by the implicit sampling rate or expressed using appropriate time stamps associated to each VOP or video frames, or audio packet), one can express the desired process decoding time as any decoding time value that satisfy the expression :

$$T_{process} = \sum_{i \in S_{CGD}} (a_i w_i^{CGD} + b_i w_i) + \sum_{i \in S_{Orig}} c_i w_i \leq T_{Alloc} \tag{13}$$

Obviously for any Allocated Decoding Time the aim is to respect the real-time constraints with the lowest degradation in the video/audio content. Associating a degradation measure to each $w_i^{CGD}$ it is possible to minimize the degradation for a given TAlloc. Therefore, the aim is to find the set $S_{a,b}$ of couple of coefficients $a_i$, $b_i$, with $i \in S^{CGD}$, that satisfy expression (12) and minimize the video or audio degradations expressed as difference with the non degraded output :

$$S_{a,b} = \text{argmin}(a,b)_{i \in S_{CGD}} : (PSNR - PSNR(a_i, b_i)) \tag{14}$$

The determination of the set $S_{a,b}$ can be done by means of any suitable optimization method or any suitable optimization heuristic by the Video Decoder Supervisor, schematically represented in Figure 14. In summary, the Video Decoder Supervisor receives from the OS the Allocated Decoding Time signal ($T_{Alloc}$), the decoding time prediction signal (TPred) from the Complexity Prediction unit, and the Complexity Information signal represented by the actual values of the coding/decoding statistic (set of ci coefficients) for the VO. Since the Video Decoder Supervisor knows the values of the set of $w_i$ and $w_i^{CGD}$ it can determine, by a suitable standard optimization technique, the corresponding set of coefficients $a_i, b_i$ such that expression (12) is satisfied. Having defined the set of $a_i, b_i$ coefficients the CGD decoding is partially defined. In other words, the set of coefficients defines for each $i \in S^{CGD}$ how many degraded algorithms ($f_j^{CGD}$) at the place of original algorithms ($f_j$) need to be executed.

Since the determination of the degradation coefficients is done on the basis of the decoding time prediction, the video decoder can generate a Decoding Status signal reporting the status of the decoding (i.e. the fraction of the bit-stream or the fraction of the VO already decoded). The signal representing the Decoding Status of the decoding process reports to the Video Decoder Supervisor an information which can be used to correct the Computational Graceful Degradation Directive signal (i.e. the setting of the $a_j, b_j$ coefficients in this example) if the Current Decoding Time and the Current Decoding Time Prediction signal are not conformant. Current Predicted Decoding Time means the Decoding Time Prediction calculated by using elation (13), only counting the occurrences of the decoding algorithms actually used to decode the fraction of the decoded bit-stream at the current reference time (time for which the decoding status signal is generated). The term not conformant means that the actual Decoding Time is greater than the Decoding Time Prediction of an amount of time which overcomes statistical variations which are functions of the complexity information, thus reporting possible errors in the Decoding Time Prediction signal.

The described interactions between OS, the Decoder and Video Decoder Supervisor can be easily extended for the case of sequences containing multiple VO at the same sampling time (associated time stamps), or belonging to a defined time interval containing several sampling periods (several associated time stamps). Expressions (10,11,13,14) can be easily modified including the appropriate summation over all VOP. Therefore, in the case of N VOP at the same sampling time t, one have :

$$T_N(t) = \sum_{n=1}^{N} T_n(t) > T_{Alloc} \tag{15}$$

where $T_N(t)$ is the total decoding time of the N VOP.

$$T_N(t) \cong T_{Pred,N} = \sum_{n=1}^{N} T_{Predn}(t) = \sum_{n=1}^{N} \sum_{i=1}^{I} c_{i,n} w_i \tag{16}$$

$$T_{CGD,N} = \sum_{n=1}^{N} ( \sum_{i \in S_{CGD}} c_{i,n} w_i^{CGD} + \sum_{i \in S_{Orig}} c_{i,n} w_i) \tag{17}$$

$$T_{Pred,N} - T_{CGD,N} = \sum_{n=1}^{N} \sum_{i \in S_{CGD}} c_{i,n} (w_i - w_i^{CGD}) \tag{18}$$

$$a_{i,n} + b_{i,n} = c_{i,n} \tag{19}$$

$$T_{Process,N}=\sum_{n=1}^{N}(\sum_{i\in S_{CGD}}(a_{i,n}w_i^{CGD}+b_{i,n}w_i)+\sum_{i\in S_{Orig}}c_{i,n}w_i)\leq T_{Alloc} \tag{20}$$

$$S_{a,b,N}=argmin_{(a,b)_i\in S_{CGD}}(\sum_{n=1}^{N}(PSNR-PSNR(a_{i,n},b_{i,n}))) \tag{21}$$

or :

$$S_{a,b,N}=argmin_{(a,b)_i\in S_{CGD}}(\sum_{n=1}^{N}\alpha_n(PSNR-PSNR(a_{i,n},b_{i,n}))) \tag{22}$$

where $a_n$ is a semantic degradation coefficient which might be available in the coded bitstreams.

For N Video Objects and M sampling time intervals Dt (denoted also as time stamps) one have :

$$T_{N,M}=\sum_{m=1}^{M}T_N(t+m\Delta t)=\sum_{m=1}^{M}\sum_{n=1}^{N}T_n(t+m\Delta t)>T_{Alloc} \tag{23}$$

$$T_{N,M}\cong T_{Pred,N,M}=\sum_{m=1}^{M}\sum_{n=1}^{N}T_{Pred_n}(t+m\Delta t)=\sum_{m=1}^{M}\sum_{n=1}^{N}\sum_{i=1}^{I}c_{i,n,m}w_i \tag{24}$$

$$T_{CGD,N,M}=\sum_{m=1}^{M}\sum_{n=1}^{N}(\sum_{i\in S_{CGD}}c_{i,n,m}w_i^{CGD}+\sum_{i\in S_{Orig}}c_{i,n,m}w_i) \tag{25}$$

$$T_{Pred,N,M}-T_{CGD,N,M}=\sum_{m=1}^{M}\sum_{n=1}^{N}\sum_{i\in S_{CGD}}c_{i,n,m}(w_i-w_i^{CGD}) \tag{26}$$

$$a_{i,n,m}+b_{i,n,m}=c_{i,n,m} \tag{27}$$

$$T_{Process,N,M}=\sum_{m=1}^{M}\sum_{n=1}^{N}(\sum_{i\in S_{CGD}}(a_{i,n,m}w_i^{CGD}+b_{i,n,m}w_i)+\sum_{i\in S_{Orig}}c_{i,n,m}w_i)\leq T_{Alloc} \tag{28}$$

$$S_{a,b,N,M} = \arg\min_{(a,b)_{i \in S_{CGD}}} \left( \sum_{m=1}^{M} \sum_{n=1}^{N} (PSNR - PSNR(a_{i,n,m}, b_{i,n,m})) \right) \tag{29}$$

or

$$S_{a,b,N,M} = \arg\min_{(a,b)_{i \in S_{CGD}}} \left( \sum_{m=1}^{M} \sum_{n=1}^{N} \alpha_n (PSNR - PSNR(a_{i,n,m}, b_{i,n,m})) \right) \tag{30}$$

## 9.2 Extension of the techniques to video/audio composition

The methods aiming at predicting the decoding time (i.e. generating a Decoding Time prediction Signal) of video frames or video objects, so as to respect the real-time constraints specified implicitly by the audio/video rates or by the timing information carried by the associated time stamps, can be easily extended to the video/audio composition processes. Composition process means the action of putting decompressed video or audio objects together in the same representation space. In a similar way of the decoding process, one can generate a Composition Time Prediction for each composition process according to the interactions described in Figure 12. Such Composition Time Prediction is a function of the occurrence of composition algorithms, composition modes and composition parameters (associated composition statistics). Differently from the decoding process, composition algorithms, modes and parameters can be also provided by an interactive user interface. In a similar way the Composition Allocated Time can be generated as function of the Composition Time Prediction. The interactions between the compositor and the OS can be described as in Figure 12 where the Decoder is substituted by the Compositor.

The technique of associating Decoding Degradation Algorithms and decoding by using degradation algorithms described in section 6.1 and Figure 14 can be applied by substituting respectively the Allocated Decoding Time by the Decoding Time Prediction, the Target Decoding Time and the Decoder Reference Time by the Allocated Composition Time, the Composition Time Prediction by the Target Composition Time and the Compositor Reference Time. All relations and equations reported in section 6.1 referring to the decoding process can be referred to the composition process.

## 9.3 Examples of possible degradation modes

The decoding operations of a video compression algorithm can be divided into two main categories :

1) operations that cannot be simplified since they may prevent the extraction and usage of relevant coding information,
2) operations that can be simplified, possibly leading to imprecise or degraded video results.

To the first category typically belong all bit-stream parsing operations, entropy decoding (i.e. VLD and arithmetic coding), and all operations related to synchronization and to the syntax of the decoding process. For these operations, no degradation mode definition is possible, otherwise it would imply skipping image portions or entire frames since either the data or the coding modes and coding parameters are lost.

To the second category, for instance, belong operations such as the IDCT, the prediction with and without motion compensation in its various forms (PB/B-frame prediction, overlapped block motion compensation (OBMC), half pixel interpolation and so on, padding, shape coding. Simplifications of such operations applied to pixels or transform coefficients are always possible but at the expenses of imprecise results. The challenge can be expressed as follows : given a specific compression standard, software and processor architecture, implement it and find the $f_i^{CGD}$ which provides the maximum complexity reduction ($w_i - w_i^{CGD}$) versus the minimum image/audio quality degradation (usually measured in PSNR). Many are the algorithms that can be simplified. We report here only two examples that illustrate the idea.

### 9.3.1 IDCT simplified modes

IDCT on a 8x8 block can be decomposed into 16 IDCT operation on a 8x1 block, or on IDCT considering only the lowest 4x4 or 2x2 coefficients. Skipping higher order 8x1 IDCT or enabling processing only 2x2 or 4x4 coefficients constitute some alternatives which are less complex than the standard 8x8 IDCT. Obviously, these less demanding alternatives yield a filtering of the high frequency possibly contained in the higher order coefficients.

9.3.2 Simplified prediction modes

Many prediction modes can be simplified at the expenses of some PSNR degradations. In particular, the most complex such as the OBMC with or without half-pel motion compensation can yield relevant complexity decreases of both computational complexity and memory bandwidth by implementing simpler algorithms.

10. EXAMPLES OF RESULTS FOR THE MPEG-4 VIDEO COMPRESSION STANDARD

This section reports simulation results of the decoding of VOP using the complexity model and decoding time prediction results described in Section 4. The MPEG-4 VM6 algorithm in the Momusys VM6 implementation modified adding degradation functions to the advanced prediction modes has been used for the simulations. A fixed amount of processing time is allocated for each VOP composing the sequences. In case the decoding time prediction ($T_{Pred}$) for each VOP exceeds the fixed allocated time ($T_{Alloc}$), an appropriate number of advanced prediction modes are executed using degraded functions in order to satisfy relation (13).

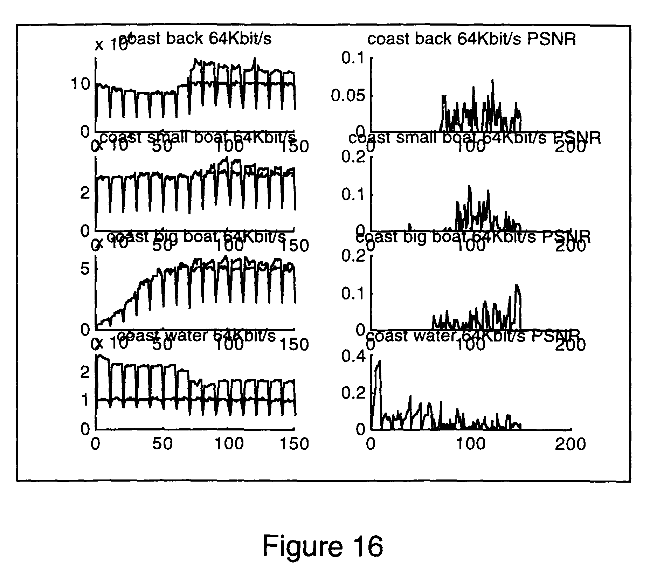

Figures 16, 17, 18 report the decoding results at 64, 128 and 256 kb/s for the four VO (Small Boat, Big Boat, background and Water) of the sequence Coastguard. On the left, the diagrams report the decoding time of each VO expressed in msec versus the VOP number. Two curves are reported : original decoding and decoding using degradation function in order to satisfy the decoding time limits. The PSNR image degradations corresponding to the execution of degraded functions are reported on the right.

Figure 16 reports on the left standard decoding time and CGD decoding time (in msec) for the four VO of the sequence Coastguard at 64 kb/s. Each VO has a upper bound for the CGD decoding time. On the right the PSNR loss of the CGD decoding with reference to the standard decoding.

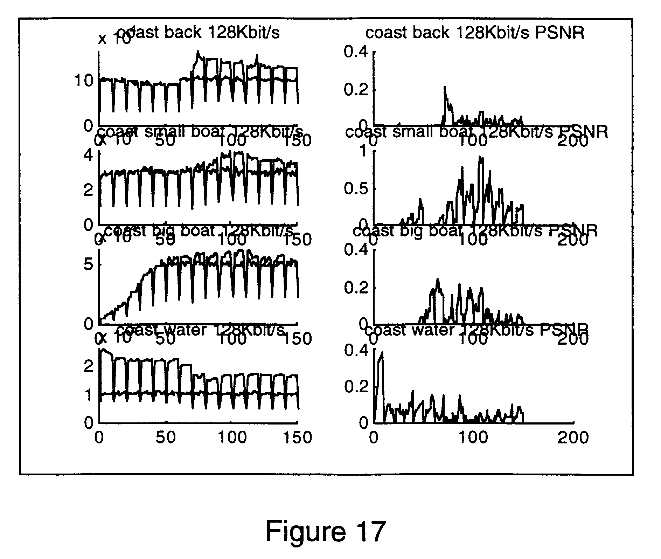

Figure 17 reports on the left standard decoding time and CGD decoding time (in msec) for the four VO of the sequence Coastguard at 128 kb/s. Each VOP has a upper bound for the CGD decoding time. On the right the PSNR loss of the CGD decoding with reference to the standard decoding.

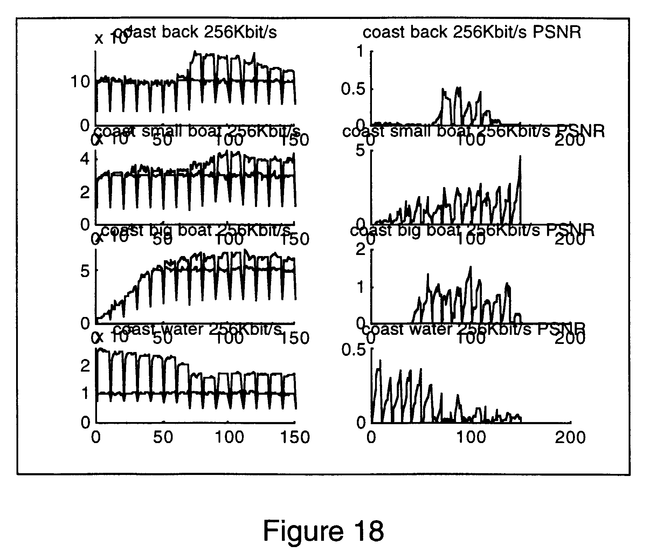

Figure 18 reports on the left standard decoding time and CGD decoding time (in msec) for the four VO of the sequence Coastguard at 256 kb/s. Each VO has a upper bound for the CGD decoding time. On the right the PSNR loss of the CGD decoding with reference to the standard decoding.

The implementation of CGD base on the decoding time prediction generation technique enables, within the discussed limits, the a priori setting of the decoding time guaranteeing the possibility of a scheduling of each decoding task that satisfy real time constraints, even if the available resources (Allocated Decoding Time) are inferior to the theoretically necessary ones. Moreover, the degradations introduced are visually acceptable and they can be minimized according to expression (14) by suitable techniques. The results obtained with a PSNR degradated are certainly much more desirable than introducing sudden interruptions and image content losses to the video sequence, and enables an efficient resource allocation policy.

**Claims**

1.   Method for primary processing a digital signal comprising the steps of :

-   providing a digital signal to a primary processing unit ;
-   primary processing said signal with said primary processing unit according to a plurality of primary processing algorithms to provide primary processed output signals,
-   determining statistics of use of at least one of said primary processing algorithms,
-   providing a digital statistics signal representative of said statistics for each of said primary processed output signals
-   associating to each of said primary processed output signals its own statistics signal ;
-   determining a complexity primary processing information signal based on said statistic signal.

2.   Digital primary processed output signal, generated by a primary processing unit using primary processing algorithms and being intended to be transmitted to a receiving device wherein said primary processed output signal comprises data bit streams, each of said data bit streams comprising a main bit string representative of said primary processed output signal and a secondary bit string representative of the statistics of use of said primary processing algorithms associated to said main bit string.

3. Method for secondary processing a secondary digital output signal according to claim 2 comprising the steps of :

    (a) reading said secondary bit string ;
    (b) determining, from the secondary bit string, primary processing algorithms to be used to secondary process said primary output signal associated to said main bit string, for generating a complexity primary processed information signal for each signal ;
    (c) allocating a secondary processing time and/or operating system resources as a function of said complexity primary processed information signal for secondary processing of said primary output signal ;
    (d) sending main bit string to secondary processing means ;
    (e) secondary processing said main bit string using said allocated secondary processing time and/or operating system resources, according to a secondary process and
    (f) generating a secondary processed signal.

4. Method for coding a digital signal comprising the steps of :

- providing an uncompressed digital signal including audio packets, video frames, video planes, or audio/video objects to an encoder ;
- compressing said signal with said encoder according to a compression syntax, said encoder using a plurality of coding algorithms to provide a compressed signal including coded audio packets, video frames, video planes or audio/video objects,
- determining statistics of use of at least one of decoding algorithms necessary to decode each of said coded audio packets, video frames, video planes or audio/video objects from said associated coding algorithms, and/or determining statistic of use of at least one of coding algorithms,
- providing a digital statistics signal representative of said statistics for each of said coded audio packets, video frames, video planes or audio/video objects,
- associating to each of said coded audio packets, video frames, video planes or audio/video objects its own statistics signal.

5. Coding method according to claim 3, wherein the step of determining statistics consists in determining the statistics of use of some of decoding algorithms, wherein to each decoding algorithm is associated at least one decoding mode and/or decoding parameter and wherein the statistics signal is based on the decoding modes and/or decoding parameters.

6. Coding method according to claim 3 or 4, wherein the step of determining statistics further consists in determining the statistics of use of some of coding algorithms when said coding algorithms and the compression syntax allow the determination of corresponding decoding algorithms necessary to decode each of said coded audio packets, video frames, video planes or audio/video objects wherein to each coding algorithm is associated at least one coding mode and/or coding parameter and wherein the statistics signal is based on the coding modes and/or coding parameters necessary to decode when using said coding algorithms.

7. Coding method according to claim 4, wherein the statistic signal is generated by juxtaposing digital words each representing the occurrences of use of a decoding mode and/or decoding parameter necessary to decode said associated audio packet, video frame, video plane or audio/video object.

8. Coding method according to claim 5 and/or 6, wherein the statistic signal is generated by juxtaposing digital words each representing the occurrences of use of a coding mode and/or coding parameter necessary to decode said associated audio packet, video frame, video plane or audio/video object.

9. Coding method according to any of claims 3 to 7, wherein the step of associating consists in inserting said statistics signal into said compressed signal for each associated coded audio packet, video frame, video plane or audio/video object.

10. Coding method according to any of claims 3 to 8, wherein the step of determining statistics consists in computing the occurrence of use of said coding and/or decoding algorithms for determining a complexity information for each coded audio packet, video frame, video plane or audio/video object.

11. Digital compressed signal including coded audio packets, video frames, video planes or audio/video objects, said signal being generated by an encoder using a compression syntax and coding algorithms and being intended to be transmitted to a receiving device wherein said signal is decoded according to decoding algorithms, and wherein said signal comprises at least a layer of coded audio packets, video frames, video planes or audio/video objects bit streams, each of said bit streams comprising a main bit string representative of the coded audio packets, video frames, video planes or audio/video objects and a secondary bit string representative of the statistics of use of said coding and/or decoding algorithms associated to said main bit string.

12. Digital compressed signal, according to claim 10, wherein said secondary bit string is inserted in said layer of said bit streams.

13. Digital compressed signal, according to claim 10, further comprising a plurality of parallel layers of coded audio packets, video frames, video planes, or audio/video objects bit streams, wherein said main bit string is inserted or transmitted in a layer different to said second bit string.

14. Digital compressed signal, according to claim 11 or 12, wherein said secondary bit string is inserted or transmitted prior to said main bit string.

15. Digital compressed signal, according to any of claims 10 to 13, wherein to each decoding algorithm is associated at least one decoding mode and/or decoding parameter and wherein said secondary bit string consists of words each representing the occurrences of use of the decoding modes and/or decoding parameters.

16. Digital compressed signal, according to claim 10 or 14, wherein to each coding algorithm is further associated at least one coding mode and/or coding parameter and wherein said secondary bit string consists of words each representing the occurrences of use of the coding modes and/or coding parameters, said coding algorithms and the compression syntax allowing the determination of corresponding decoding algorithms necessary to decode each of said coded audio packets, video frames, video planes or audio/video objects.

17. Method for decoding a digital compressed signal according to any of claims 10 to 15 comprising the steps of :

(a) reading said secondary bit string ;
(b) determining, from the secondary bit string, decoding algorithms to be used to decode said coded audio packets, video frames, video planes or audio/video objects, associated to said main bit string, for generating a complexity information signal for each coded audio packet, video frame, video plane or audio/video object ;
(c) allocating a decoding time and/or operating system resources as a function of said complexity information signal for the decoding process of said compressed audio packet, video frames, video planes or audio/video objects ;
(d) sending main bit string to decoding means ;
(e) decoding said main bit string using said allocated decoding time and/or operating system resources, according to a decoding process and
(f) generating a decompressed signal including decoded audio packets, video frames, video planes or audio/video objects.

18. Method for decoding a digital compressed signal according to claim 16 wherein the step determining decoding algorithms is also based on the occurrence of use of the decoding modes and/or decoding parameters necessary to decode the said audio packets, video frames, video planes or audio/video objects.

19. Method for decoding a digital compressed signal according to claim 16 or 17 wherein the step determining decoding algorithms is further based on the occurrence of use of the coding modes and/or coding parameters used by said coding algorithms, wherein said coding algorithms and the compression syntax allow the determination of corresponding decoding algorithms necessary to decode each of said coded audio packets, video frames, video planes or audio/video objects

20. Decoding method according to any of claims 16 to 18 further comprising the step of determining a decoding time prediction signal as a function of said complexity information signal ; said decoding time prediction signal being used for the step of allocating said decoding time and/or operating system resources for optimizing said decoding process and or decoding processes.

21. Decoding method according to claim 19 wherein the step of decoding the main bit string consists in

- generating an allocated decoding time signal,
- sending said decoding time prediction signal and allocated decoding time signal to decoder supervisor means ;
- generating and sending a degradation directive signal to said decoding means, as a function of said decoding time prediction signal, allocated decoding time, so as to define the use of number and type of decoding algorithms and degradation algorithms to be used in the decoding process of said main bit string.

22. Decoding method according to claim 20 wherein the step of decoding the main bit string further consists in :

- generating a decoder time reference signal and a target decoding time signal,
- sending said decoder time reference signal and said target decoding time signal to decoder supervisor means ;
- generating and sending said degradation directive signal to said decoding means while also taking into account said decoder time reference signal and said target decoding time signal.

23. Decoding method according to claim 20 or 21 wherein the step of decoding the main bit string further consists in :

- generating a decoding status signal from said decoding means
- sending said decoding status signal to said decoder supervisor means from the said decoding means ;
- generating and sending said degradation directive signal to said decoding means while also taking into account said decoding status signal.

24. Decoding method according to claim 16 wherein steps (a) to (c) are carried out prior to step (e).

25. Decoding method according to any of claims 20 to 23, further comprising the step of sending said complexity information signal to said decoder supervisor means.

26. Decoding method according to any of claims 20 to 24 wherein the step of generating said degradation directive signal consists in associating at least one degradation algorithm to at least one decoding algorithm, said decoding algorithm and said degradation algorithm being associated to a complexity coefficient/weight representative of the execution time of said decoding algorithm and said degradation algorithm.

27. Decoding method according to claim 25 wherein said complexity coefficients/weights are dependent on the decoder used for implementing said decoding method.

28. Decoding method according to claim 25 or 26, wherein said decoding time prediction is a function of the occurrence of use of said decoding algorithm and said complexity coefficients/weights according to the following equation :

$$T(t) \cong T_{Pred}(t) = \sum_{i=1}^{I} c_i w_i \qquad (9),$$

where T is the time necessary to decode a coded audio packet, video frame, video plane or audio/video object, $T_{Pred}$ is the decoding time prediction of said audio packets, video frames, video planes or audio/video objects, $c_i$ is the occurrence of said decoding algorithm, and $w_i$ is the complexity coefficient/weight.

29. Decoding method according to claim 27, wherein when the decoding time prediction is a function of the occurrence of use of said decoding algorithms and degradation algorithms, said degradation algorithms being associated to a complexity coefficient/weight.

30. Decoding method according to claim 27 or 28, wherein when the decoding time prediction is greater than the allocated decoding time, one uses a degradation method according to which one selects the degradation algorithm instead of its associated decoding algorithm according to equation :

$$T_{process} = \sum_{i \in S_{CGD}} (a_i w_i^{CGD} + b_i w_i) + \sum_{i \in S_{Orig}} c_i w_i \leq T_{Alloc} \qquad (13)$$

where, $T_{Process}$ is the prediction time necessary to decode a audio packets, video frames, video planes or audio/video objects, said decoding time prediction taking account the degradation, $c_i$ is the occurrence of decoding algorithm, $a_i$ is the number the selected degradation algorithms, $w_i^{CGD}$ is the complexity coefficient/weight of the degradation algorithm, $b_i$ is the number of the non selected degradation algorithms, and $w_i$ is the complexity coefficient/weight, where $a_i + b_i = c_i$, so as to reach a $T_{Process}$ lesser than or equal to said allocated decoding time.

31. 30. Decoding method according to claim 28 or 29, wherein said decoding status signal is also used for monitoring the current decoding time of a coded audio packets, video frames, video planes or audio/video objects and make sure that said current decoding time is in conformity with the associated decoding time prediction.

32. Decoding method according to claim 30, wherein if said current decoding time is not in conformity with the associated predicted decoding time, then said decoder supervisor means uses at least one further degradation algorithm defined in claim 29.

33. Decoding method according to claim 31, wherein if said current decoding time is not in conformity with the associated decoding time prediction, then said decoder supervisor means further uses said complexity information signal.

34. Decoding method according to any of claims 29 to 32 for a plurality of audio packets, video frames, or video planes, some of them belonging to different audio/video objects, wherein when the decoding time prediction is the sum of the decoding time prediction of each of said audio packets, video frames or video planes of said plurality, said decoding time prediction being defined in claim 28.

35. Coding system for an uncompressed digital signal including audio packets, video frames, video planes or audio/video objects, comprising :

- an audio/video encoder receiving said audio packets, video frames, video planes or audio/video objects on one input terminal, said encoder being intended to code said signal according to a compression syntax by using a plurality of coding algorithms, and to provide, on one output terminal, a compressed signal including coded audio packets, video frames, video planes or audio/video objects intended to be decompressed according to associated decoding algorithms ;
- means for determining statistic of use of at least one of said coding algorithms, and/or means for determining statistic of use of at least one of said decoding algorithms ;
- and means for generating a digital statistic signal representative of said statistics for each of said coded audio packets, video frames, video planes or audio/video objects.

36. Coding system according to claim 27, wherein said statistics determining means comprise computing means for counting the occurrence of use of coding modes and/or coding parameters used by the encoder for encoding said signal, when using said coding algorithms.

37. Coding system according to claim 34 or 35, wherein said statistics determining means further comprise computing means for counting the occurrence of use of decoding modes and/or decoding parameters from said coding algorithms used by the encoder for encoding said signal.

38. Coding system according to any of claim 34 to 36, further comprising means for generating a compressed output signal including coded audio packets, video frames, video planes or audio/video objects wherein each of said coded audio packet, video frame, video plane or audio/video object is associated with its statistics signal.

39. Decoding system for a digital signal including coded audio packets, video frames, video planes or audio/video objects according to any of claims 5 to 15, comprising :

- a decoder receiving said main bit string, representative of a coded audio packets, video frames, video planes or audio/video objects, on a first input terminal and providing, on an output terminal, a decompressed signal including decoded audio packets, video frames, video planes or audio/video objects,
- resource allocation means ;
- means for complexity prediction receiving, on one input terminal, said secondary bit string, and providing to resource allocation means a decoding time prediction signal which is determined as a function of the information contained in said secondary bit string, said resource allocation means providing to the decoder information representative of the allocated decoding time.

**40.** Decoding system according to claim 38 wherein said resource allocation means comprises an operating system or a layer of an operating system.

**41.** Decoding system according to claim 38 or 39 wherein said decoding time prediction signal is also provided to a second input terminal of said decoder.

**42.** Decoding system according to any of claims 38 to 40, wherein

- said decoder comprises decoder supervisor means and audio/video decoding means,
- said decoder supervisor means receiving, on a first input terminal, said allocated decoding time signal and, on a second input terminal, said predicted decoding time signal and providing on one output terminal a degradation directive signal,
- said decoding means receiving on a first input terminal said main bit string and on a second input terminal said degradation directive signal and providing on an output terminal said decompressed signal including decoded audio packets, video frames, video planes or audio/video objects.

**43.** Decoding system according to claim 41 wherein said decoder further receive a complexity information signal on third input terminal.

**44.** Decoding system according to claim 41 wherein said decoder further receive a decoder time reference signal and a target decoding time signal respectively on fourth and fifth input.

**45.** Decoding system according to any of claims 41 at 43 wherein said decoding means are arranged to provide a decoding status signal to a sixth input of the decoder supervisor means.

**46.** Decoding system according to claim 44 wherein said complexity information signal is applied to said decoder supervisor means.

**47.** Method for composing a digital signal comprising the steps of :

- providing an uncompressed video element including video frames and/or video planes and/or video objects, textures, texts, 2 and 3 dimensional graphic primitives, 2 and 3 dimensional models to a composing device ;
- composing said video element with said composing device according to a composition syntax an/or a interactivity information, said composing device using a plurality of composing algorithms necessary to compose each of said video elements and provide a representation in a common visual representation space of the said multiple elements,
- determining statistics of use of at least one of said composing algorithms for generating a complexity information
- associating to each of said video elements its own complexity information.

**48.** Composition method according to claim 46 further consisting in :

- providing an uncompressed digital audio element including audio packets, audio objects, synthetic audio objects
- composing said audio element with said composing device according to a composition syntax, said audio composing device using a plurality of composing algorithms necessary to compose each of said audio elements and provide a representation in a common audio representation space
- determining statistics of use of at least one of said algorithms for generating a complexity information.
- associating to each of said audio element its own complexity information.

**49.** Composition method according to claim 46 or 47, wherein to each composition algorithm is associated at least one composition mode and/or composition parameter and wherein the statistics is based on the occurrence of use of composition modes and/or composition parameters.

**50.** Method for composing a digital signal according to any of claims 46 to 48 comprising the steps of :

(a) reading the complexity information associated to at least one of said video element and/or audio element
(c) allocating a composition time and/or operating system resources as a function of said complexity information signal for the composition process of said associated video element and/or audio element ;

(d) sending said video element and/or audio element to composition means ;

(e) compose in a common representation space said video element and/or audio element using said allocated composition time and/or operating system resources, according to a composition process, and

(f) generating a common representation space including said video element and/or audio element according to the composition syntax.

**51.** Method for composing digital video/audio elements according to claim 49 wherein the step determining composition algorithms is also based on the occurrence of use of the composition modes and/or composition parameters necessary to compose the said composition elements in a common composition space.

**52.** Composition method according to any of claims 48 to 50 further comprising the step of determining a composition time prediction signal as a function of said complexity information ; said composition time prediction signal being used for the step of allocating said composition time and/or operating system resources for optimizing said composition process and or composition processes.

**53.** Composition method according to claim 50 wherein the step of composing the audio/video elements consists in

- generating an allocated composition time signal,
- sending said composition time prediction signal and allocated composition time signal to composition supervisor means ;
- generating and sending a degradation directive signal to said composition means, as a function of said composition time prediction signal, allocated composition time, so as to define the use of number and type of composition algorithms and degradation algorithms to be used in the composition process of said video/audio composition elements.

**54.** Composition method according to claim 52 wherein the step of composing the video/audio elements further consists in :

- generating a compositor time reference signal and a target composition time signal,
- sending said compositor time reference signal and said target composition time signal to composition supervisor means ;
- generating and sending said degradation directive signal to said composition means while also taking into account said compositor time reference signal and said target composition time signal.

**55.** Composition method according to claim 52 or 53 wherein the step of composing the audio/video elements further consists in :

- generating a compositor status signal from said composition means
- sending said compositor status signal to said composition supervisor means from the said composition means ;
- generating and sending said degradation directive signal to said means while also taking into account said compositor status signal.

**56.** Composition method according to claim 48 wherein steps (a) to (c) are carried out prior to step (e).

**57.** Composition method according to any of claims 51 to 55, further comprising the step of sending said complexity information signal to said compositor supervisor means.

**58.** Decoding method according to any of claims 53 to 56 wherein the step of generating said degradation directive signal consists in associating at least a degradation algorithm to at least one composition algorithm, said composition algorithm and said degradation algorithm being associated to a complexity coefficient/weight representative of the execution time of said composition algorithm and said degradation algorithm.

**59.** Composition method according to claim 57 wherein said complexity coefficients/weights are dependent on the compositor used for implementing said composition method.

**60.** Composition method according to claim 57 or 58, wherein said composition time prediction signal is a function of the occurrence of use of said composition algorithms and said complexity coefficients/weights according to the following equation :

$$T(t) \cong T_{Pred}(t) = \sum_{i\text{-}1}^{I} c_i w_i \qquad (9),$$

where T is the time necessary to compose a audio/video element, $T_{Pred}$ is the composition time prediction of said audio/video element, $c_i$ is the occurrence of said composition algorithm, and $w_i$ is the complexity coefficient/weight.

61. Composition method according to claim 59, wherein when the composition time prediction is a function of the occurrence of use of said composition algorithms and degradation algorithms, said degradation algorithms being associated to a complexity coefficient/weight.

62. Composition method according to claim 59 or 60, wherein when the composition time prediction is greater than the allocated composition time, one uses a degradation method according to which one selects the degradation algorithm instead of its associated composition algorithm according to equation :

$$T_{process} = \sum_{i \in S_{CGD}} (a_i w_i^{CGD} + b_i w_i) + \sum_{i \in S_{Orig}} c_i w_i \leq T_{Alloc} \qquad (13)$$

where, $T_{Process}$ is the prediction time necessary to compose a audio/video element, said composition time prediction taking account the degradation, $c_i$ is the occurrence of composition algorithm, $a_i$ is the number the selected degradation algorithms, $w_i^{CGD}$ is the complexity coefficient/weight of the degradation algorithm, $b_i$ is the number of the non selected degradation algorithms, and $w_i$ is the complexity coefficient/weight, where $a_i + b_i = c_i$, so as to reach a $T_{Process}$ lesser than or equal to said allocated composition time.

63. Composition method according to claim 60 or 61, wherein said composition status signal is also used for monitoring the current composition time of a composition video/audio element and make sure that said current composition time is in conformity with the associated composition time prediction.

64. Composition method according to claim 62, wherein if said current composition time is not in conformity with the associated composition time prediction, then said composition supervisor means uses at least one further degradation algorithm defined in claim 61.

65. Composition method according to claim 63 wherein if said current composition time is not in conformity with the associated composition time prediction, then said decoder supervisor means further uses said complexity information signal.

66. Composition method according to any of claims 51 to 63 for a plurality of audio/video composition elements wherein when the composition time prediction is the sum of the composition prediction time of each of said audio/video composition elements, said composition time prediction being defined in claim 50.

67. Composition system for an uncompressed digital video element including video frames and/or video planes and/or video objects, textures, texts, 2 and 3 dimensional graphic primitives, 2 and 3 dimensional models, comprising :

- a video compositor receiving said video element on one input terminal, said compositor being intended to compose said video element using a composition syntax using a plurality of composing algorithms, and to provide, on one output terminal, a representation in a common video representation space said video element ;
- means for determining statistic of use of at least one of said composition algorithms,
- and means for generating a digital statistic signal representative of said statistics for each of said composed video element.

68. Composition system for an uncompressed digital audio element including audio packets, audio objects, synthetic audio objects, comprising :

- a audio compositor receiving said audio element on one input terminal, said compositor being intended to compose said audio element using a composition syntax using a plurality of composing algorithms, and to provide, on one output terminal, a representation in a common audio representation space said audio element ;
- means for determining statistic of use of at least one of said composition algorithms,
- and means for generating a digital statistic signal representative of said statistics for each of said composed audio element.

69. Composition system for an audio-visual object comprising a composition system according to claim 66 combined with a composition system according to claim 67.

Figure 1

Figure 2

Figure 3

Figure 4

Figure 5

Figure 6

Figure 7

EP 0 919 952 A1

Figure 8

Figure 9

Figure 10

Figure 11

Figure 12

CONSTRUCTION OF THE COMPLEXITY HEADER BY THE ENCODER

Uncompressed Video Sequence

Coding Algorithm/Mode/Parameter
Occurrence Measures

Video Encoder

Mod/Par 1

Mod/Par 2

Mod/Par 3

· · · · · · · · · · ·

· · · · · · · · · · ·

· · · · · · · · · · ·

Statistics of coding
algorithms, coding
modes and associated
coding parameters

Mod/Par n-1

Mod/Par n

| 0101000101000111101010010101010101001011 | 0100100 | 010010 | ............ | 000101 | 000101 | 110100 |

Compressed Video Frame
or Video Object

Complexity Information Header

Figure 13

Decoder Time     Target Decoding
Reference ( $T_{ref}$ )     Time ( $T_{target}$ )     Bitstream Compressed Video

Decoding
Time
Prediction
( $T_{Pred}$ )

Video Decoder
Supervisor

Decoding Status

Allocated
Decoding Time
( $T_{Alloc}$ )

Complexity
Information
Header

Video Decoder

Computational Graceful
Degradation Directives

Decompressed
Video

## Figure 14

Figure 15

Figure 16

Figure 17

Figure 18

| Demultiplex | Syntactic Decoding | Decompression | Composition and Rendering |
| --- | --- | --- | --- |
| Elementary Streams | Syntactic Decoded Streams | Primitive AV Objects | |

Scene Description
(Script or Classes)

Composition
Informations

Audiovisual Hierarchical
Interactive Scene

Upstream Data
(User Events, Class Request, ...)

Display and User Interaction

Figure 19

Figure 20

**Figure 21**

**European Patent Office**

**EUROPEAN SEARCH REPORT**

Application Number

EP 98 10 9423

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| E | EP 0 866 426 A (ALSTHOM CGE ALCATEL) 23 September 1998 * abstract; claims 1,5,6 * | 1-68 | G06T9/00 |
| A | EP 0 512 174 A (SEMAPHORE INC) 11 November 1992 * page 2, line 40 - line 43 * * page 3, line 32 - line 36 * | 1-68 | |
| A | MATTAVELLI M ET AL: "Computational graceful degradation for video sequence decoding" PROCEEDINGS. INTERNATIONAL CONFERENCE ON IMAGE PROCESSING (CAT. NO.97CB36144), PROCEEDINGS OF INTERNATIONAL CONFERENCE ON IMAGE PROCESSING, SANTA BARBARA, CA, USA, 26-29 OCT. 1997, pages 330-333 vol.1, XP002080307 ISBN 0-8186-8183-7, 1997, Los Alamitos, CA, USA, IEEE Comput. Soc, USA | | |

TECHNICAL FIELDS SEARCHED (Int.Cl.6)

G06T

The present search report has been drawn up for all claims

| Place of search | Date of completion of the search | Examiner |
|---|---|---|
| THE HAGUE | 12 October 1998 | Pierfederici, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document